# EUROPÄISCHE PATENTSCHRIFT

(11) **EP 3 822 046 B1**
(45) Veröffentlichungstag und Bekanntmachung des Hinweises auf die Patenterteilung: **08.05.2024**
(21) Anmeldenummer: 19208678.3
(22) Anmeldetag: 12.11.2019
(51) Int. Cl.: B25J 9/14, B25J 9/10, B25J 18/00, B25J 9/04

(54) **ROBOTERSTRUKTUR**
ROBOT STRUCTURE
STRUCTURE DE ROBOT

(43) Veröffentlichungstag der Anmeldung: 19.05.2021
(73) Patentinhaber: Festo SE & Co. KG, 73734 Esslingen (DE)
(72) Erfinder: Thallemer, Axel, 80796 München (DE); Kostadinov, Aleksandar, 4614 Marchtrenk (AT); Diensthuber, Dominik, 4652 Fischlham (AT)
(74) Vertreter: Patentanwälte Magenbauer & Kollegen Partnerschaft mbB

(56) Entgegenhaltungen:
- CN-A- 104 875 202
- US-A- 4 739 692
- US-A1- 2009 314 119
- US-A1- 2011 218 676

## Beschreibung

Die Erfindung betrifft eine Roboterstruktur, mit einem beweglichen Roboterarm, der über mindestens ein eine Längserstreckung aufweisenden Armglied verfügt, wobei mindestens ein Armglied des Roboterarmes folgendermaßen aufgebaut ist:
(a) mit einer Sockeleinheit,
(b) mit einer Schwenkeinheit, die über einen Fußabschnitt und einen diesbezüglich beabstandeten Kopfabschnitt verfügt, wobei der Kopfabschnitt eine zur Kraftabgabe geeignete Kraftabgabe-Schnittstelle aufweist,
(c) wobei die Schwenkeinheit an ihrem Fußabschnitt über eine Schwenklagereinrichtung an der Sockeleinheit verschwenkbar gelagert ist, sodass sie unter Ausführung einer Schwenkbewegung um eine von der Schwenklagereinrichtung definierte Haupt-Schwenkachse in einer zu der Haupt-Schwenkachse rechtwinkeligen Schwenkebene relativ zu der Sockeleinheit verschwenkbar ist, wobei sich der Kopfabschnitt bei der Schwenkbewegung entlang einer kreisbogenförmigen Arbeits-Bahnkurve bewegt,
(d) mit mindestens einem eine Längsachse aufweisenden fluidbetätigten ersten Kontraktionsantrieb und mindestens einem eine Längsachse aufweisenden fluidbetätigten zweiten Kontraktionsantrieb, wobei jeder dieser Kontraktionsantriebe ein erstes Endstück und ein zweites Endstück sowie einen sich zwischen den beiden Endstücken erstreckenden flexiblen Kontraktionsschlauch aufweist, wobei eine Fluidbeaufschlagung eines von dem Kontraktionsschlauch begrenzten internen Antriebsraumes mit einer Längenkontraktion des Kontraktionsschlauches einhergeht, aufgrund derer sich der Abstand zwischen den beiden Endstücken verringert,
(e) wobei der mindestens eine erste Kontraktionsantrieb und der mindestens eine zweite Kontraktionsantrieb jeweils mit einem ersten Endstück in einem ersten Befestigungspunkt an der Sockeleinheit und mit dem zweiten Endstück in einem zweiten Befestigungspunkt an der Schwenkeinheit befestigt ist,
(f) wobei die Haupt-Schwenkachse der Schwenkeinheit, der zweite Befestigungspunkt des mindestens einen ersten Kontraktionsantriebes und der zweite Befestigungspunkt des mindestens einen zweiten Kontraktionsantriebes, bei orthogonal zur Schwenkebene orientierter Blickrichtung, in den Eckpunkten eines imaginären Antriebs-Dreiecks liegen, sodass durch eine eine Fluidbeaufschlagung des Antriebsraumes hervorrufende Betätigung des mindestens einen ersten Kontraktionsantriebes eine Schwenkbewegung der Schwenkeinheit in einer ersten Schwenkrichtung und durch eine eine Fluidbeaufschlagung des Antriebsraumes hervorrufende Betätigung des mindestens einen zweiten Kontraktionsantriebes eine Schwenkbewegung der Schwenkeinheit in einer der ersten Schwenkrichtung entgegengesetzten zweiten Schwenkrichtung hervorrufbar ist.
(g) wobei der Kopfabschnitt der Schwenkeinheit einschließlich der daran befindlichen Kraftabgabe-Schnittstelle durch gesteuerte Betätigung des mindestens einen ersten Kontraktionsantriebes und des mindestens einen zweiten Kontraktionsantriebes entlang der Arbeits-Bahnkurve hin und her bewegbar und positionierbar ist.

Eine derartige Roboterstruktur ist aus der US 2009/314119 A1 bekannt. Sie ist dort als ein wurmartiger Mechanismus ausgeführt, der über eine Mehrzahl aneinandergereihter Betätigungseinheiten verfügt, die jeweils ein Stützsegment und mehrere von sogenannten künstlichen Muskeln gebildete Betätigungselemente aufweisen. Die Stützsegmente haben jeweils einen Längsträger und eine Stützplatte und sind gelenkig miteinander verbunden. Mit Hilfe der Betätigungselemente, die an den Stützplatten befestigt sind, können benachbarte Stützsegmente relativ zueinander verschwenkt werden.

Die US 4 739 692 A und die CN 104 875 202 A beschreiben jeweils einen Schwenkmechanismus mit zwei an einer Verbindungsstruktur verschwenkbar gelagerten Plattformen und mit mehreren an den Plattformen angreifenden Kontraktionsaktuatoren, durch deren Fluidbeaufschlagung ein Verschwenken der Plattformen hervorrufbar ist.

Eine aus der DE 10 2010 013 617 B4 bekannte Roboterstruktur definiert einen modular aufgebauten Roboter, der über einen beweglichen Roboterarm verfügt, der mehrere paarweise durch jeweils ein Gelenkmodul verschwenkbar miteinander verbundene Armglieder enthält. Der Roboterarm selbst ist ebenfalls durch ein Gelenkmodul an einer säulenartigen Basiseinheit verschwenkbar gelagert. Jedes Gelenkmodul ist von einem elektrisch betätigbaren Drehantrieb gebildet, sodass es möglich ist, die Armglieder relativ zueinander und mit Bezug zu der Basiseinheit zu verschwenken, um einen am distalen Ende des Roboterarmes angebrachten Endeffektor wunschgemäß zu positionieren.

Aus der DE 10 2017 202 369 B3 ist ein Roboterarm bekannt, der mehrere jeweils durch ein Schwenkgelenk verschwenkbar miteinander verbundene Armglieder aufweist, wobei in das Schwenkgelenk ein fluidbetätigter Schwenkantrieb integriert ist, durch den sich eine relative Schwenkbewegung zwischen den aneinander angelenkten Armgliedern steuern lässt.

Aus der WO 00/61952 A1 ist ein von der Anmelderin unter der Bezeichnung "Fluidic Muscle" vertriebener Kontraktionsantrieb bekannt, der einen sich zwischen zwei Endstücken erstreckenden flexiblen Kontraktionsschlauch aufweist, der sich aus einem gummielastischen Schlauchkörper und einer in diesen Schlauchkörper integrierten Strangstruktur bestehend aus einer Vielzahl von biegeflexiblen und zugleich axial zugfesten Fasersträngen zusammensetzt.

Der Erfindung liegt die Aufgabe zu Grunde, eine kostengünstig aufgebaute, mit geringem Gewicht realisierbare und bei kompakten Abmessungen hohe Betriebskräfte ermöglichende Roboterstruktur bereitzustellen.

Diese Aufgabe wird bei einer Roboterstruktur der eingangs genannten Art dadurch gelöst, dass die Befestigungspunkte der ersten und zweiten Kontraktionsantriebe so platziert sind, dass in zwei um 90 Grad zueinander verschwenkten ersten und zweiten Schwenkpositionen der Schwenkeinheit die Längsachse des mindestens einen ersten Kontraktionsantriebes und die Längsachse des mindestens einen zweiten Kontraktionsantriebes jeweils parallel zueinander ausgerichtet sind, jedoch eine in der Schwenkebene um 90 Grad zueinander verdrehte Ausrichtung haben.

Die erfindungsgemäße Roboterstruktur hat einen verblüffend einfach aufgebauten Roboterarm, der sich bei Bedarf in einer Leichtbauweise realisieren lässt und dennoch dafür ausgelegt ist, an der beweglichen Kraftabgabe-Schnittstelle des mindestens einen Armgelenkes hohe Betriebskräfte abgreifen zu können und die Kraftabgabe-Schnittstelle mit hohen Beschleunigungswerten entlang einer kreisbogenförmigen Arbeits-Bahnkurve zu bewegen. Die Kraftabgabe-Schnittstelle kann beispielsweise für den Anbau eines Endeffektors und/oder für den Anbau eines weiteren Armgliedes im Zusammenhang mit einem mehrgliedrigen Roboterarm ausgelegt sein. Mindestens ein und bevorzugt jedes Armglied des Roboterarmes hat eine Sockeleinheit und eine schwenkbar daran gelagerte Schwenkeinheit, wobei zwischen die Sockeleinheit und die Schwenkeinheit eine mit einem Druckfluid und insbesondere mit Druckluft betätigbare Linearantriebseinrichtung eingegliedert ist, die sich aus mehreren fluidbetätigten Kontraktionsantrieben zusammensetzt, die so installiert sind, dass durch die Betätigung mindestens eines ersten Kontraktionsantriebes eine Schwenkbewegung in einer ersten Schwenkrichtung und durch die Betätigung mindestens eines zweiten Kontraktionsantriebes eine Schwenkbewegung in einer der ersten Schwenkrichtung entgegengesetzten zweiten Schwenkrichtung hervorrufbar ist. Das Konzept der fluidbetätigten Kontraktionsantriebe mit einem längenmäßig kontrahierbaren Kontraktionsschlauch liefert trotz geringer Abmessungen sehr hohe Zugkräfte, die für ein hohes an der Kraftabgabe-Schnittstelle abgreifbares Schwenkmoment verantwortlich sind. Die hohe Energiedichte der Kontraktionsantriebe bietet zudem die vorteilhafte Möglichkeit, die ersten und zweiten Kontraktionsantriebe zugunsten schmaler Abmessungen des Armgliedes in der Schwenkebene der Schwenkeinheit mit geringem Abstand zueinander und somit auch mit geringem Quer-Abstand zu der Haupt-Schwenkachse anzuordnen und dennoch ein hohen Drehmoment auf die Schwenkeinheit auszuüben, sodass an der Kraftabgabe-Schnittstelle eine entsprechend hohe Betriebskraft abgegriffen werden kann. Eine geringe Beabstandung zwischen den ersten und zweiten Kontraktionsantrieben reduziert zudem das zum Verschwenken der Schwenkeinheit erforderliche Maß an Kontraktion, sodass sich die Kontraktionsantriebe problemlos in ihrem optimalen Arbeitsbereich betreiben lassen, in dem die Kraftabgabe am größten ist. Dennoch lässt sich die Fluidbeaufschlagung feinfühlig dosieren, um die Kraftabgabe-Schnittstelle präzise positionieren zu können. Ein besonderer Vorteil des Armgliedkonzeptes resultiert aus der Platzierung der Haupt-Schwenkachse der Schwenkeinheit, des zweiten Befestigungspunktes des mindestens einen ersten Kontraktionsantriebes und des zweiten Befestigungspunktes des mindestens einen zweiten Kontraktionsantriebes in den Eckpunkten eines imaginären Dreiecks, das zur leichteren Bezugnahme als Antriebs-Dreieck bezeichnet wird. Bei der Schwenkbewegung der Schwenkeinheit schwenkt dieses Antriebs-Dreieck um die Haupt-Schwenkachse in der hierzu rechtwinkeligen Schwenkebene. Je nach Schwenkrichtung findet dabei eine Längenkontraktion des mindestens einen ersten Kontraktionsantriebes oder des mindestens einen zweiten Kontraktionsantriebes statt, während gleichzeitig der jeweils andere mindestens eine erste bzw. zweite Kontraktionsantrieb eine Längung erfährt, die mit einer axialen Längsdehnung des Kontraktionsschlauches einhergeht. Durch das erfindungsgemäße Konzept lässt sich ein optimales Verhältnis von Länge zu Breite des jeweiligen Armgliedes realisieren, verbunden mit der Möglichkeit, die Kontraktionsantriebe mit ihrer optimalen Kennlinie zu betreiben. Durch das verwirklichte kinematische Prinzip erhält man eine ausgeglichene Kraftentfaltung während der gesamten Schwenkbewegung, verbunden mit der Möglichkeit eines konstruktiven Aufbaus mit geringer Anzahl von Komponenten und kompakten Abmessungen. Die Befestigungspunkte der Kontraktionsantriebe sind so platziert, dass in zwei um 90 Grad zueinander verschwenkten ersten und zweiten Schwenkpositionen der Schwenkeinheit die Längsachsen sämtlicher Kontraktionsantriebe parallel zueinander ausgerichtet sind, wobei die Kontraktionsantriebe allerdings in der zweiten Schwenkposition der Schwenkeinheit eine um 90 Grad verdrehte Ausrichtung bezüglich derjenigen Ausrichtung haben, die sie in der ersten Schwenkposition der Schwenkeinheit einnehmen.

Vorteilhafte Weiterbildungen der Erfindung gehen aus den Unteransprüchen hervor.

Für die Kinematik des Armgliedes optimal hat es sich erwiesen, wenn das Antriebs-Dreieck ein gleichschenkliges Dreieck ist, dessen Spitze auf der Haupt-Schwenkachse der Schwenkeinheit liegt. Die beiden anderen Eckpunkte des gleichschenkligen Dreiecks, die die Befestigungspunkte für die zweiten Endstücke der ersten und zweiten Kontraktionsantriebe markieren, sind von der Haupt-Schwenkachse gleich weit entfernt. Damit ist unter anderem eine einfache steuerungstechnische oder regelungstechnische Auslegung der Kontraktionsantriebe möglich. Bei dem gleichschenkligen Dreieck handelt es sich insbesondere um ein spitzwinkliges Dreieck.

Die Schwenkeinheit und die Kontraktionsantriebe sind insbesondere so an der Sockeleinheit angebracht, dass die Haupt-Schwenkachse der Schwenkeinheit sowie die ersten Befestigungspunkte der ersten und zweiten Kontraktionsantriebe auf einer imaginären Verbindungsgerade liegen, wenn man die Anordnung mit zur Schwenkebene orthogonaler Blickrichtung betrachtet.

Bevorzugt ist die Auslegung so getroffen, dass die ersten und zweiten Kontraktionsantriebe untereinander die gleiche Länge haben, wenn die Schwenkeinheit eine Schwenkposition einnimmt, bei der eine die zweiten Befestigungspunkte der ersten und zweiten Kontraktionsantriebe verbindende imaginäre Verbindungsgerade parallel zu der vorgenannten, die ersten Befestigungspunkt und die Haupt-Schwenkachse verbindenden Verbindungsgerade ausgerichtet ist.

Bei den ersten und zweiten Schwenkpositionen der Schwenkeinheit handelt es sich vorzugsweise um End-Schwenkpositionen, die jeweils durch einen mechanischen Anschlag vorgegeben sind. Dadurch ist sichergestellt, dass die Armglieder nicht über den gewünschten Arbeitsbereich hinausbewegt werden und dass keine zu möglichen Schäden führenden Überdehnungen der gummielastischen Kontraktionsschläuche der Kontraktionsantriebe auftreten können.

In allen Schwenk-Zwischenpositionen zwischen der ersten und zweiten Schwenkposition hat der mindestens eine erste Kontraktionsantrieb zweckmäßigerweise eine bezüglich des mindestens einen zweiten Kontraktionsantriebes geneigte Längserstreckung. Bevorzugt liegen hierbei die ersten und zweiten Befestigungspunkte der ersten und zweiten Kontraktionsantriebe in den Eckpunkten eines Trapezes.

Grundsätzlich können zur Platzierung der zweiten Befestigungspunkte beliebige Stellen der Schwenkeinheit gewählt werden. Bevorzugt wird allerdings ein Abstand zur Haupt-Schwenkachse, der möglichst groß ist, um bei der Betätigung der Kontraktionsantriebe ein möglichst großes Drehmoment auf die Schwenkeinheit auszuüben, sodass an der Kraftabgabe-Schnittstelle ein hohes Schwenkmoment abgegriffen werden kann. Es wird daher als besonders günstig angesehen, wenn sich sowohl der zweite Befestigungspunkt des mindestens einen ersten Kontraktionsantriebes als auch der zweite Befestigungspunkt des mindestens zweiten Kontraktionsantriebes am Kopfabschnitt der Schwenkeinheit befindet, wobei die zweiten Befestigungspunkte insbesondere, bezogen auf die Längsrichtung des Armgliedes, auf zumindest im Wesentlichen gleicher Höhe mit der Kraftabgabe-Schnittstelle angeordnet sind.

Insbesondere abhängig von den gewünschten Betriebskräften und der gewünschten Dynamik der Schwenkbewegungen kann das mindestens eine Armglied eine prinzipiell beliebige Anzahl erster Kontraktionsantriebe und zweiter Kontraktionsantriebe enthalten. Es ist insbesondere möglich, dass sich die Anzahl der ersten Kontraktionsantriebe von der Anzahl der zweiten Kontraktionsantriebe unterscheidet. Besonders vorteilhaft ist es allerdings, wenn pro Armglied die Anzahl der ersten Kontraktionsantriebe der Anzahl der zweiten Kontraktionsantriebe entspricht, wobei insbesondere eine paarweise Anordnung empfehlenswert ist.

Mindestens ein Armglied kann mehrere rechtwinkelig zu der Schwenkebene der Schwenkeinheit nebeneinander angeordnete erste Kontraktionsantriebe und auch mehrere rechtwinkelig zu der Schwenkebene der Schwenkeinheit nebeneinander angeordnete zweite Kontraktionsantriebe aufweisen, die jeweils in einem ersten Befestigungspunkt an der Sockeleinheit und in einem zweiten Befestigungspunkt an der Schwenkeinheit befestigt sind. Sowohl bei den ersten Kontraktionsantrieben als auch bei den zweiten Kontraktionsantrieben fallen die ersten Befestigungspunkt zusammen und fallen auch die zweiten Befestigungspunkte zusammen, wenn man die Anordnung in einer Blickrichtung orthogonal, das heißt rechtwinkelig zur Schwenkebene betrachtet.

Mindestens ein Armglied kann auch so ausgeführt sein, dass es nur einen einzigen ersten Kontraktionsantrieb und nur einen einzigen zweiten Kontraktionsantrieb aufweist.

Verfügt der Roboterarm über mehrere in ihrer Längsrichtung aneinandergesetzte Armglieder, ist es vorteilhaft, wenn die Anzahl der in ein jeweiliges Armglied integrierten Paare aus ersten und zweiten Kontraktionsantrieben sich in der Längsrichtung des Roboterarms verringert. Beispielsweise kann ein erstes Armglied über zwei Paare erster und zweiter Kontraktionsantriebe verfügen, während ein darauffolgend angeordnetes Armglied nur mit einem einzigen Paar erster und zweiter Kontraktionsantriebe ausgestattet ist.

Zugunsten einer sehr variablen Positioniermöglichkeit für die Kraftabgabe-Schnittstelle ist es vorteilhaft, wenn der Roboterarm mehrere Armglieder aufweist, die in ihrer Längsrichtung aneinandergereiht sind, wobei unmittelbar aufeinanderfolgende Armglieder dadurch miteinander gekoppelt sind, dass die Sockeleinheit des einen Armgliedes an der Kraftabgabe-Schnittstelle des anderen Armgliedes befestigt ist.

Die Kraftabgabe-Schnittstelle jedes Armgliedes des Roboterarms ist insbesondere als eine Befestigungsschnittstelle ausgebildet, die dafür geeignet ist, wahlweise ein weiteres Armglied oder einen zu positionierenden Endeffektor anzubauen. Als Endeffektor kommt beispielsweise ein zur Handhabung von Gegenständen geeigneter Greifer oder ein Bearbeitungswerkzeug in Frage. Die Ausgestaltung des Endeffektors hängt vom Verwendungszweck der Roboterstruktur ab. Die Befestigungsschnittstelle enthält beispielsweise mindestens eine Montagefläche und/oder mindestens ein Befestigungsloch und/oder mindestens ein Befestigungselement wie zum Beispiel eine Befestigungsschraube.

Die Schwenkeinheit mindestens eines und insbesondere jedes Armgliedes des Roboterarms hat zweckmäßigerweise mindestens einen in sich starren und bevorzugt aus einem Leichtmetall wie Aluminium bestehenden starren Schwenkkörper, der die Schwenkbewegung um die Haupt-Schwenkachse ausführt. Der Schwenkkörper hat einen dem Fußabschnitt der Schwenkeinheit zugeordneten proximalen Endabschnitt und einen dem Kopfabschnitt der Schwenkeinheit zugeordneten distalen Endabschnitt. Enthält das Armglied nur einen einzigen solchen Schwenkkörper, sind der Fußabschnitt und der Kopfabschnitt der Schwenkeinheit zweckmäßigerweise unmittelbar von dem erwähnten proximalen und distalen Endabschnitt des Schwenkkörpers gebildet.

Mindestens ein Armglied kann über eine Schwenkeinheit verfügen, die sich aus mehreren Schwenkkörpern zusammensetzt, wobei diese mehreren Schwenkkörper in zu der Schwenkebene parallelen Ebenen nebeneinander angeordnet sind und zum einheitlichen Verschwenken aneinander befestigt sind. Die gegenseitige Befestigung erfolgt insbesondere im Bereich der proximalen und distalen Endabschnitte. Bei einer derart ausgebildeten Schwenkeinheit resultiert der Fußabschnitt aus den mehreren proximalen Endabschnitten und der Kopfabschnitt aus den mehreren distalen Endabschnitten der Schwenkkörper.

Das konstruktive Konzept des mindestens einen Schwenkkörpers sieht insbesondere eine T-förmige Hauptstruktur vor, die sich aus einer Längsstrebe und einer Querstrebe zusammensetzt, wobei die Querstrebe an einem vorderen Endbereich der Längsstrebe im Bereich der Längsmitte der Querstrebe angebracht ist. Die Querstrebe bildet den distalen Endabschnitt des Schwenkkörpers und ein diesbezüglich entgegengesetzter hinterer Endbereich der Längsstrebe bildet den proximalen Endabschnitt des Schwenkkörpers. Die Haupt-Schwenkachse befindet sich an dem hinteren Endbereich der Längsstrebe, während die zweiten Befestigungspunkte mit Abstand zu der Längsstrebe diesseits und jenseits der Längsstrebe an der Querstrebe angeordnet sind.

Die Längsstrebe ist in der Lage, die bei der Betätigung der Kontraktionsantriebe auftretenden Druckkräfte aufzunehmen. Um eine hohe Steifigkeit der T-Struktur zu erhalten, ist es vorteilhaft, wenn sich zwischen jedem der beiden äußeren Endbereiche der Querstrebe und dem hinteren Endbereich der Längsstrebe eine Versteifungsstrebe erstreckt. Zwischen jeder der beiden Versteifungsstreben und der Längsstrebe befindet sich zweckmäßigerweise eine fachwerkartige Stützstruktur, durch die die Versteifungsstrebe bezüglich der Längsstrebe abgestützt ist. Auf diese Weise verfügt der Schwenkkörper insgesamt trotz geringen Materialaufwandes über eine sehr hohe Struktursteifigkeit.

Bei dem Schwenkkörper handelt es sich insbesondere um einen einstückigen Körper.

Die Sockeleinheit weist zweckmäßigerweise für jeden in das zugeordnete Armglied integrierten Schwenkkörper einen gesonderten, individuellen Sockelkörper auf. Ein mit nur einem Schwenkkörper ausgestattetes Armglied hat dementsprechend nur einen solchen gesonderten Sockelkörper, während ein über mehrere Schwenkkörper verfügendes Armglied eine entsprechende Mehrzahl von gesonderten Sockelkörpern enthält. An jedem Sockelkörper ist über die Schwenklagereinrichtung der zugeordnete Schwenkkörper bezüglich der Haupt-Schwenkachse verschwenkbar gelagert.

Wenn zwei Armglieder aneinander befestigt sind, erfolgt dies insbesondere dadurch, dass der mindestens eine Sockelkörper des einen Armgliedes direkt an der Kraftabgabe-Schnittstelle des anderen Armgliedes befestigt ist. Gleichwohl besteht prinzipiell die Möglichkeit, den oder die Sockelkörper eines Armgliedes an einem gemeinsam zugeordneten Tragkörper zu befestigen, der dann seinerseits an der Kraftabgabe-Schnittstelle fixiert wird. Der Tragkörper fungiert somit quasi als ein Adapterkörper.

Mindestens ein und insbesondere jedes Armglied kann durchaus über nur einen einzigen Schwenkkörper verfügen, der mit einer beliebigen Anzahl erster und zweiter Kontraktionsantriebe kombiniert ist, wobei der Schwenkkörper abhängig von der erforderlichen Stabilität des zugeordneten Armgliedes dimensioniert ist.

Erheblich variabler ist allerdings das Konzept einer Roboterstruktur, das auf einer Vielzahl untereinander identischer, also einheitlich gestalteter Armmodule aufbaut, die zur Bildung eines Roboterarmes in einer gewünschten Anzahl und Gruppierung modular kombinierbar sind. Bei jedem Armmodul handelt es sich um eine selbst zusammenhaltende Baugruppe, die einen Sockelkörper, einen Schwenkkörper, einen fluidbetätigten ersten Kontraktionsantrieb und einen fluidbetätigten zweiten Kontraktionsantrieb beinhaltet. Der Schwenkkörper ist mittels der Schwenklagereinrichtung in einer um die Haupt-Schwenkachse verschwenkbaren Weise an dem Sockelkörper gelagert und es ist ferner jeder der beiden Kontraktionsantriebe zum einen mit seinem ersten Endstück in einem ersten Befestigungspunkt am Sockelkörper und zum anderen mit seinem zweiten Endstück in einem zweiten Befestigungspunkt am Schwenkkörper befestigt. Bei jedem Armmodul liegen die Haupt-Schwenkachse und die zweiten Befestigungspunkte der beiden Kontraktionsantriebe in den Eckpunkten des weiter oben schon erwähnten, bevorzugt gleichschenkligen imaginären Antriebs-Dreiecks. Jedes Armmodul ist im Prinzip autark arbeitsfähig, da sich sein Schwenkkörper abhängig von der fluidischen Ansteuerung des ersten und zweiten Kontraktionsantriebes relativ zum zugeordneten Sockelkörper verschwenken und wunschgemäß schwenkwinkelmäßig positionieren lässt.

Ein über eine hohe Stabilität und ein hohes Kraftabgabevermögen verfügendes Armglied setzt sich aus mehreren Armmodulen zusammen, die längsseits nebeneinander aneinander angereiht sind und die einerseits im Bereich ihrer Sockelkörper und andererseits im Bereich der distalen Endabschnitte ihrer Schwenkkörper aneinander befestigt sind. Die mehreren Schwenkkörper bilden daher gemeinsam die Schwenkeinheit des Armgliedes.

Eine Roboterstruktur kann einen Roboterarm enthalten, der nur ein einziges, in dem vorgenannten Sinne ausgebildetes Armglied aufweist. Allerdings kann eine Roboterstruktur auch einen mehrgliedrigen Roboterarm enthalten, der mehrere in dem vorgenannten Sinne ausgebildete Armglieder aufweist.

Es besteht zudem die Möglichkeit zur Realisierung eines Roboterarmes, der mindestens ein und insbesondere genau ein Armglied aufweist, das sich ausschließlich aus einem einzigen Armmodul zusammensetzt.

Ein mehrgliedrig aufgebauter Roboterarm verfügt über mehrere Armglieder, die paarweise aneinander befestigt sind, und zwar insbesondere dadurch, dass mindestens ein Armmodul mit seinem Sockelkörper an einen distalen Endabschnitt mindestens eines Schwenkkörpers eines weiteren Armmoduls angebaut ist. Bevorzugt sind die Armmodule derart aneinander angebaut, dass ihre Haupt-Schwenkachsen parallel zueinander ausgerichtet sind.

Als vorteilhaft wird es erachtet, wenn die Roboterstruktur außer dem Roboterarm auch noch eine den Roboterarm tragende Basiseinheit enthält. Diese Basiseinheit ist beispielsweise säulenartig konzipiert, kann aber prinzipiell auch jede andere Struktur haben. Ein Armglied des Roboterarmes ist mit seiner Sockeleinheit an der Basiseinheit befestigt, sodass durch entsprechende Betätigung der vorhandenen ersten und zweiten Kontraktionsantriebe ein Verschwenken der vorhandenen Kraftabgabe-Schnittstellen relativ zu der Basiseinheit hervorrufbar ist.

Ein modular unter Verwendung mindestens eines Armmoduls aufgebautes Armglied ist insbesondere unter Verwendung des weiter oben erwähnten Tragkörpers der Sockeleinheit an der Basiseinheit befestigt.

Eine besonders zweckmäßig ausgebildete Basiseinheit verfügt über ein durch eine Antriebseinrichtung der Basiseinheit rotativ antreibbares Abtriebsglied, an dem der Roboterarm mit der Sockeleinheit eines Armgliedes befestigt ist. Die Befestigung erfolgt bei modular aufgebautem Roboterarm insbesondere mit dem schon erwähnten Tragkörper der Sockeleinheit, an dem über einen oder mehrere gesonderte Sockelkörper die gewünschte Anzahl an Armmodulen angebaut ist. Der Tragkörper fungiert hier als Adapter zur rotativen Adaption des Roboterarmes an die Basiseinheit. Durch Betätigung der Antriebseinrichtung der Basiseinheit kann der Roboterarm um eine Arm-Drehachse hin und her verdreht werden, wobei diese Arm-Drehachse rechtwinkelig zu jeder Haupt-Schwenkachse des Roboterarmes ausgerichtet ist. Mit einer derart aufgebauten Roboterstruktur lässt sich vorteilhaft die Anatomie der menschlichen Armgliedmaßen nachbilden, wobei das Abtriebsglied der Basiseinheit dem menschlichen Schultergelenk entspricht. Daran anschließend können dem Oberarm, dem Unterarm und gegebenenfalls der menschlichen Hand entsprechende Armglieder als Roboterarm angesetzt sein. Mit einer solchen Roboterstruktur lassen sich insbesondere vielfältige Greif- und Handhabungsaufgaben äußerst variabel bewältigen.

Obgleich die Antriebseinrichtung der Basiseinheit prinzipiell auch elektrischer Natur sein kann, wird eine fluidbetätigte Antriebseinrichtung weit vorteilhafter angesehen, weil sie sich betriebsmäßig sehr gut mit den fluidbetätigten Kontraktionsantrieben der Armglieder kombinieren lässt. Besonders vorteilhaft ist es in diesem Zusammenhang, wenn die Antriebseinrichtung mindestens einen fluidbetätigten dritten Kontraktionsantrieb aufweist, der auf dem gleichen Betriebskonzept basiert wie die ersten und zweiten Kontraktionsantriebe.

Jeder Kontraktionsantrieb enthält zwei beabstandet zueinander angeordnete Endstücke, zwischen denen sich der Kontraktionsschlauch erstreckt und an denen der Kontraktionsschlauch mit seinen einander entgegengesetzten Endbereichen kraftübertragend und fluiddicht fixiert ist. Bevorzugt besteht der Kontraktionsschlauch aus einem gummielastischen Schlauchkörper und einer zu dem Schlauchkörper koaxialen Strangstruktur, wobei sich letztere aus einer Vielzahl von biegeflexiblen und zugleich axial zugfesten Fasersträngen zusammensetzt, die insbesondere eine Überkreuzkonfiguration aufweisen. Die Strangstruktur ist in das Material des Schlauchkörpers bevorzugt eingebettet und von außen her insbesondere nicht sichtbar. Gemeinsam mit den beiden Endstücken begrenzt der Kontraktionsschlauch einen internen Antriebsraum, der zur Betätigung beziehungsweise Aktivierung des fluidbetätigten Kontraktionsantriebes mit einem fluidischen Druckmedium beaufschlagbar ist und der zur Deaktivierung druckmäßig entlastbar ist. Durch kontrollierte Druckbeaufschlagung des Antriebsraumes mit variierbarer Einstellung des Innendruckes lässt sich die abgreifbare, als Zugkraft wirkende Antriebskraft nach Bedarf einstellen und der Grad der Längenkontraktion variieren, durch den der Schwenkwinkel der Schwenkbewegung vorgegeben wird.

Nachfolgend wird die Erfindung anhand der beiliegenden Zeichnung näher erläutert. In dieser zeigen:
- Figur 1: eine bevorzugte erste Bauform der erfindungsgemäßen Roboterstruktur in einer perspektivischen Darstellung, wobei zwei strichpunktiert umrahmte Bereiche separat auch nochmals vergrößert illustriert sind,
- Figur 2: eine perspektivische Unteransicht auf die Roboterstruktur aus Figur 1 mit Blick auf einen Roboterarm dieser Roboterstruktur,
- Figur 3: eine Vorderansicht der Roboterstruktur aus Figur 1 mit Blickrichtung gemäß Pfeil III in Figur 1,
- Figur 4: den in Figur 1 oberen Bereich der Roboterstruktur in einem Längsschnitt entsprechend Schnittlinie IV-IV, wobei allerdings von den beiden ersichtlichen Armgliedern das sich unmittelbar an eine Basiseinheit anschließende Armglied ungeschnitten gezeigt ist
- Figur 5: eine Draufsicht auf der Roboterstruktur aus Figur 1 mit Blickrichtung gemäß Pfeil V in Figur 1,
- Figur 6: einen oberen Bereich eines weiteren Ausführungsbeispiels der Roboterstruktur in einer perspektivischen Darstellung, deren Roboterarm im Vergleich zu der Roboterstruktur der Figuren 1 bis 5 über nur ein einziges Armglied verfügt,
- Figur 7: die Anordnung aus Figur 6 im abgenommenen Zustand des hier aus einem einzigen Armmodul bestehenden Armgliedes, und
- Figur 8: eine schematische Darstellung des bei den Armgliedern des Roboterarms realisierten kinematischen Konzeptes, wobei drei mögliche Schwenkpositionen der Schwenkeinheit illustriert sind, nämlich in Figur 8(a) eine erste Schwenkposition, in Figur 8(b) eine Zwischen-Schwenkposition und in Figur 8(c) eine zweite Schwenkposition.

Die in der Zeichnung in mehreren Ausprägungen illustrierte Roboterstruktur 1 hat einen Roboterarm 2, der in der betriebsbereiten Gebrauchsstellung zweckmäßigerweise an einer Basiseinheit 3 montiert ist, bei der es sich insbesondere ebenfalls um einen Bestandteil der Roboterstruktur 1 handelt.

Die Basiseinheit 3 repräsentiert exemplarisch einen Sockel für den Roboterarm 2. Alternativ könnte der Roboterarm 2 an einer beliebigen anderen, als Basiseinheit 3 fungierenden Tragstruktur montiert sein, beispielsweise an einer Tragwand.

Der Roboterarm 2 hat eine Längsachse 4, die abhängig vom Betriebszustand des Roboterarms 2 eine lineare oder eine abgeknickte Längserstreckung einnehmen kann.

Der Roboterarm 2 hat ein proximales Armende 5 und ein diesbezüglich in der Achsrichtung der Längsachse 4 entgegengesetztes distales Armende 6. An dem proximalen Armende 5 hat der Roboterarm 2 einen Adapter 7, über den er an der Basiseinheit 3 montiert ist.

Bei einem nicht illustrierten Ausführungsbeispiel ist der Roboterarm 2 mit seinem Adapter 7 unbeweglich an der Basiseinheit 3 montiert. Diesbezüglich vorteilhafter ist allerdings das illustrierte Ausführungsbeispiel, bei dem die Basiseinheit 3 ausgebildet ist, um den Roboterarm 2 zu einer durch einen Doppelpfeil angedeuteten Rotationsbewegung 8 um seine Längsachse 4 anzutreiben. Diese im Folgenden auch als Arm-Rotationsbewegung 8 bezeichnete Rotationsbewegung 8 ist sowohl im Uhrzeigersinn als auch entgegen des Uhrzeigersinns ausführbar.

Zum Hervorrufen der Arm-Rotationsbewegung 8 verfügt die Basiseinheit 3 über eine Antriebseinrichtung 11, die auf ein rotativ antreibbares Abtriebsglied 12 wirkt, an dem der Roboterarm 2 mit dem Adapter 7 befestigt ist. Das Abtriebsglied 12, bei dem es sich beispielsweise um eine Hohlwelle handelt, ist an einem Gehäuse 13 der Basiseinheit 3 um eine im Folgenden als Arm-Drehachse 14 bezeichnete Drehachse verdrehbar gelagert.

Die Antriebseinrichtung 11 ist bevorzugt von einem fluidbetätigten Typ, wobei ihr exemplarisch verwirklichter Aufbau später noch genauer beschrieben wird.

Am distalen Armende 6 des Roboterarmes 2 ist eine Endeffektor-Schnittstelle 15 ausgebildet, an der ein wie auch immer gearteter, in der Zeichnung nur schematisch angedeuteter Endeffektor 16 in bevorzugt lösbarer Weise befestigbar ist. Bei dem Endeffektor 16 handelt es sich exemplarisch um einen zum mechanischen Greifen von Gegenständen ausgebildeten Greifer. Der Endeffektor 16 kann an der Endeffektor-Schnittstelle 15 direkt oder - entsprechend des Ausführungsbeispiels - indirekt unter Mitwirkung eines Montageadapters 17 befestigt sein.

Der Roboterarm 2 kann einen eingliedrigen oder mehrgliedrigen Aufbau haben. Dementsprechend hat er ein oder mehrere Armglieder 18. Jedes Armglied 18 hat eine Längserstreckung mit einer Längsachse 21. Die Längsachsen 21 der Armglieder 18 definieren gemeinsam die Längsachse 4 des Roboterarms 2.

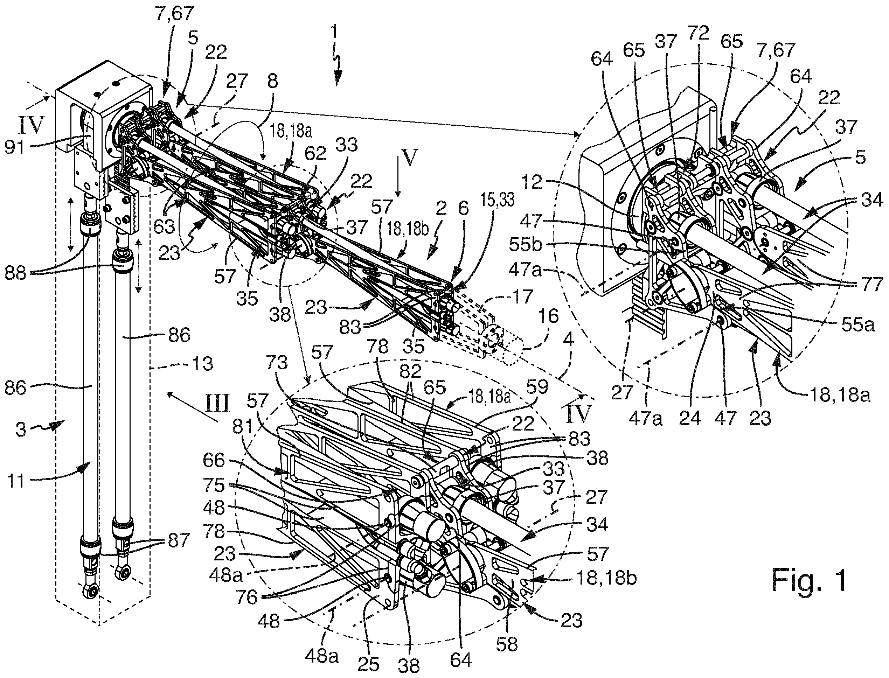

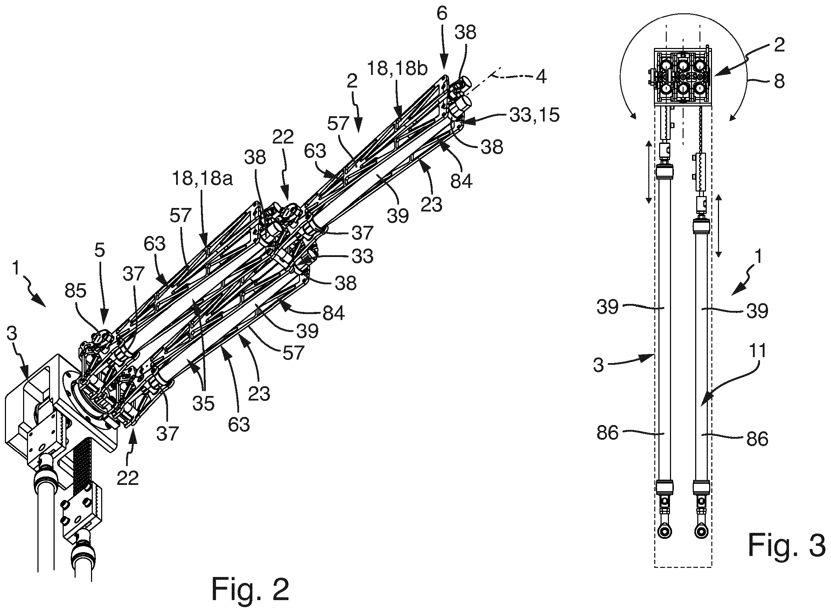

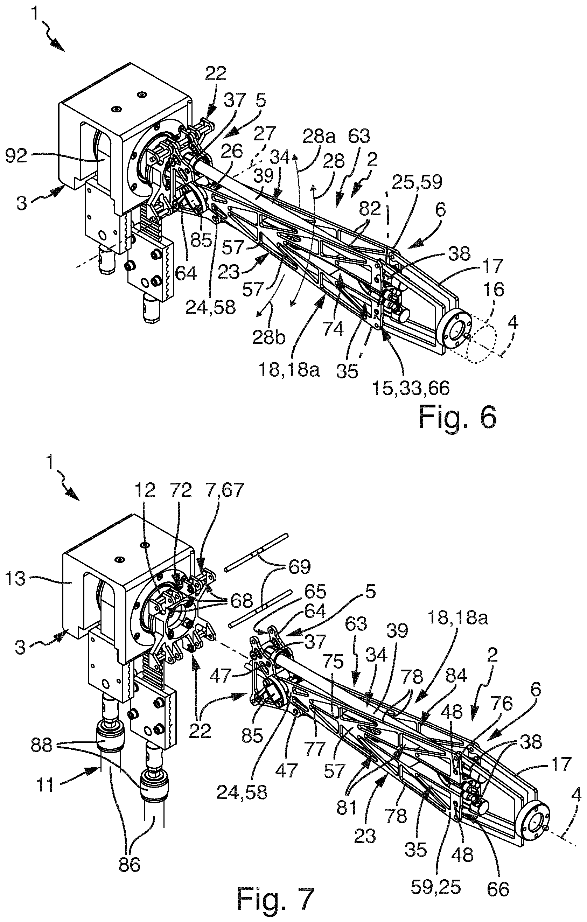

Der Roboterarm 2 der Figuren 1 bis 5 ist mit zwei Armgliedern 18 ausgestattet, während der Roboterarm gemäß Figuren 6 und 7 nur über ein einziges Armglied 18 verfügt. Prinzipiell kann der Roboterarm 2 auch mehr als zwei längs aneinandergereihte Armglieder 18 aufweisen.

Jeder Roboterarm 2 hat ein Armglied 18, durch das das proximale Armende 5 definiert ist, das exemplarisch an der Basiseinheit 3 befestigt ist. Dieses Armglied 18 wird im Folgenden zur besseren Unterescheidung auch als Haupt-Armglied 18a bezeichnet. Jedes weitere Armglied 18 des Roboterarmes 2 wird im Folgenden auch als Zusatz-Armglied 18b bezeichnet. Dementsprechend verfügt der Roboterarm 2 gemäß Figuren 6 und 7 über nur ein Hauptglied 18a, während der Roboterarm 2 gemäß Figuren 1 bis 5 über ein Haupt-Armglied 18a und ein daran angebautes Zusatz-Armglied 18b verfügt. Das distale Armende 6 befindet sich bei dem Roboterarm 2 der Figuren 1 bis 5 folglich an dem Zusatz-Armglied 18b, während es bei dem Roboterarm 2 der Figuren 6 und 7 von dem Haupt-Armglied 18a gebildet ist.

Jedes Armglied 18 hat eine Sockeleinheit 22 und eine Schwenkeinheit 23. Die Schwenkeinheit 23 hat eine Längserstreckung und verfügt über einen Fußabschnitt 24 an einem Ende und einen Kopfabschnitt 25 am diesbezüglich entgegengesetzten Ende. In beiden Fällen handelt es sich um in sich starre Strukturen.

Die Schwenkeinheit 23 ist so ausgerichtet, dass ihr Fußabschnitt 24 der Sockeleinheit 22 zugewandt ist. Die Schwenkeinheit 23 ist an ihrem Fußabschnitt 24 mittels einer Schwenklagereinrichtung 26 an der Sockeleinheit 22 verschwenkbar gelagert. Durch die Schwenklagereinrichtung 26 wird eine zur besseren Unterscheidung als Haupt-Schwenkachse 27 bezeichnete Schwenkachse für die in der Zeichnung durch einen Doppelpfeil angedeutete Schwenkbewegung 28 der Schwenkeinheit 23 definiert. Die Schwenkbewegung 28, die bidirektional ausführbar ist, findet in einer Schwenkebene 29 statt, die rechtwinkelig zu der Haupt-Schwenkachse 27 ausgerichtet ist. Bei der Schwenkbewegung 28 bewegt sich der einen größten Abstand zu der Haupt-Schwenkachse 27 aufweisende Kopfabschnitt 25 der Schwenkeinheit 23 entlang einer kreisbogenförmigen Bahnkurve, die als Arbeits-Bahnkurve 32 bezeichnet wird und in der Zeichnung strichpunktiert verdeutlicht ist.

Eine an dem Kopfabschnitt 25 ausgebildete Kraftabgabe-Schnittstelle 33 wird zusammen mit dem Kopfabschnitt 25 verschwenkt und bewirkt eine Kraftabgabe an eine an ihr angebrachte weitere Komponente der Roboterstruktur 1, um auch diese weitere Komponente im Raum zu bewegen. Bei dieser weiteren Komponente handelt es sich um einen Endeffektor 16, wenn sich die Kraftabgabe-Schnittstelle 33 an einem das distale Armende 6 definierenden Kopfabschnitt 25 einer Schwenkeinheit 23 befindet, was gemäß Figuren 1 bis 5 auf das Zusatz-Armglied 18b und gemäß Figuren 6 und 7 auf das Haupt-Armglied 18a zutrifft. Andererseits handelt es sich bei der weiteren Komponente um ein weiteres Armglied 18, wenn sich die Kraftabgabe-Schnittstelle 33 am Kopfabschnitt 25 einer Schwenkeinheit 23 befindet, die zu einem Haupt-Armglied 18a oder einem Zusatz-Armglied 18b gehört, an dem seinerseits ein weiteres Armglied 18 als Zusatz-Armglied 18b befestigt ist. Exemplarisch trifft dies auf das Haupt-Armglied 18a der Figuren 1 bis 5 zu.

Die Kraftabgabe-Schnittstelle 33 ist als eine mechanische Befestigungsschnittstelle ausgebildet, die eine mechanische Fixierung der weiteren Komponente gestattet.

Die Schwenklagereinrichtung 26 ist beispielsweise dadurch definiert, dass die Sockeleinheit 22 und der Fußabschnitt 24 miteinander fluchtende Bohrungen aufweisen, in die ein Lagerbolzen eingesteckt ist.

Zum Hervorrufen der Schwenkbewegung 28 der Schwenkeinheit 23 enthält jedes Armglied 18 mindestens einen fluidbetätigten ersten Kontraktionsantrieb 34 und mindestens einen fluidbetätigten zweiten Kontraktionsantrieb 35. Jeder Kontraktionsantrieb 34, 35 hat eine Längserstreckung mit einer linearen Längsachse 36. Der mindestens eine erste Kontraktionsantrieb 34 ist für die Erzeugung der Schwenkbewegung 28 in einer durch einen Pfeil angedeuteten ersten Schwenkrichtung 28a zuständig, während der zweite Kontraktionsantrieb 35 für die Erzeugung der Schwenkbewegung 28 in einer bezüglich der ersten Schwenkrichtung 28a entgegengesetzten zweiten Schwenkrichtung 28b zuständig ist.

Die Anzahl der in ein jeweiliges Armglied 18 integrierten ersten und zweiten Kontraktionsantriebe 34, 35 ist prinzipiell beliebig. Es kann eine gleiche oder eine ungleiche Anzahl erster und zweiter Kontraktionsantriebe 34, 35 vorhanden sein. Bevorzugt wird eine gleiche Anzahl erster und zweiter Kontraktionsantriebe 34, 35 innerhalb eines jeweiligen Armgliedes 18. Unterschiedliche Armglieder 18 können allerdings ohne weiteres über eine voneinander abweichende Anzahl erster und zweiter Kontraktionsantriebe 34, 35 verfügen.

Exemplarisch enthält das als Haupt-Armglied 18a fungierende Armglied 18 der Figuren 1 bis 5 jeweils zwei erste und zweite Kontraktionsantriebe 34, 35. Die beiden ersten Kontraktionsantriebe 34 sind ebenso wie die beiden zweiten Kontraktionsantriebe 35 in der Achsrichtung der Haupt-Schwenkachse 27 nebeneinander angeordnet und parallel zueinander ausgerichtet. Im Gegensatz dazu verfügt das Zusatz-Armglied 18b des Roboterarms 2 der Figuren 1 bis 5 über jeweils nur einen einzigen ersten und zweiten Kontraktionsantrieb 34, 35, was in gleicher Weise auf das als Haupt-Armglied 18a fungierende einzige Armglied 18 des Roboterarms der Figuren 6 und 7 zutrifft.

Wenn im Folgenden bezüglich eines Armgliedes 18 von einem ersten oder zweiten Kontraktionsantrieb 34, 35 gesprochen wird, sind damit sämtlichen ersten und zweiten Kontraktionsantriebe 34, 35 des betreffenden Armgliedes 18 gemein, sofern nicht explizit eine abweichende Angabe gemacht wird. Auf eine explizite Benennung als "erster" beziehungsweise "zweiter" Kontraktionsantrieb 34, 35 wird verzichtet, wenn sich Erläuterungen gleichermaßen auf jeden ersten Kontraktionsantrieb 34 und jeden zweiten Kontraktionsantrieb 35 beziehen.

Jeder Kontraktionsantrieb 34, 35 hat ein erstes Endstück 37 und ein diesbezüglich in der Achsrichtung der Längsachse 36 beabstandetes zweites Endstück 38. Ferner hat jeder Kontraktionsantrieb 34, 35 einen flexiblen Kontraktionsschlauch 39, der sich axial zwischen den beiden Endstücken 37, 38 erstreckt und an diesen beiden Endstücken 37, 38 jeweils abgedichtet und zugfest fixiert ist.

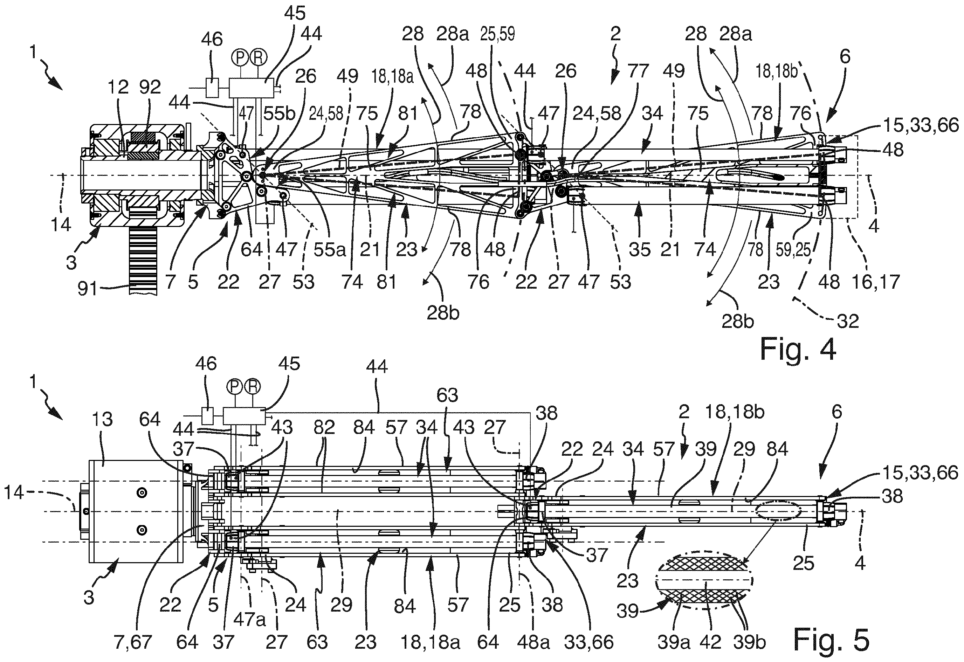

Gemeinsam begrenzen der Kontraktionsschlauch 39 und die beiden zugeordneten Endstücke 37, 38 jeweils einen zur Umgebung hin hermetisch dicht abgeschlossenen Innenraum, der als interner Antriebsraum 42 bezeichnet sei und in einer Ausschnittsvergrößerung der Figur 5 ersichtlich ist.

Der Kontraktionsschlauch 39 verfügt über einen aus einem gummielastischen Material bestehenden Schlauchkörper 39a und eine nur schematisch angedeutete, koaxial in das Material des Schlauchkörpers eingebettete Strangstruktur 39b. Die Strangstruktur 39b ist ebenso wie der Schlauchkörper 39a an den beiden Endstücken 37, 38 befestigt. Bevorzugt besteht die Strangstruktur 39b aus einer Vielzahl von biegeflexiblen und zugleich hoch zugfesten Fasersträngen, die in einer Überkreuzkonfiguration angeordnet sind, so wie dies beispielsweise aus der eingangs schon zitierten WO 00/61952 A1 hervorgeht.

Jeder Kontraktionsantrieb 34, 35 hat die Eigenheit, sich zu verkürzen, wenn der interne Antriebsraum 42 mit einem unter einem Überdruck stehenden fluidischen Druckmedium beaufschlagt wird, das im Folgenden auch als Antriebsfluid bezeichnet wird. Es kann sich um ein flüssiges oder um ein gasförmiges Antriebsfluid handeln, wobei bevorzugt Druckluft als Antriebsfluid verwendet wird.

Die Fluidbeaufschlagung des Antriebsraumes 42 ruft unter elastischer Verformung eine radiale Aufweitung des Schlauchkörpers 39a hervor, wobei eine daraus resultierende Verformung der Strangstruktur 39b zur Folge hat, dass die beiden Endstücke 37, 38 durch die Strangstruktur 39b mit einer Zugkraft beaufschlagt werden, durch die sie zueinander hingezogen werden. Durch Ablassen von Antriebsfluid aus dem Antriebsraum 42 kann erreicht werden, dass sich der Kontraktionsschlauch 39 wieder in seine Ausgangsform zurückverformt, sodass sich der Kontraktionsantrieb 34, 35 wieder verlängert beziehungsweise der Abstand zwischen den beiden Endstücken 37, 38 wieder vergrößert wird.

Für die diesbezügliche fluidische Ansteuerung mündet in den Antriebsraum 42 ein eines der beiden Endstücke 37, 38 durchsetzender Steuerkanal 43, durch den hindurch eine Fluidzufuhr und Fluidabfuhr erfolgen kann. Jeder Kontraktionsantrieb 34, 35 ist an seinem Steuerkanal 43 über eine Fluidleitung 44 an eine bevorzugt auch zu der Roboterstruktur 1 gehörende, elektrisch betätigbare Steuerventileinrichtung 45 angeschlossen, die andererseits mit einer das Antriebsfluid bereitstellenden Druckquelle P und mit einer Drucksenke R, insbesondere der Atmosphäre, verbunden ist. Mittels der Steuerventileinrichtung 45 können die einzelnen Kontraktionsantriebe 34, 35 individuell fluidisch angesteuert werden, um sie entweder durch Fluideinspeisung zu betätigen beziehungsweise zu aktivieren oder durch eine Fluidabführung zu deaktivieren.

Eine bevorzugt ebenfalls vorhandene elektronische Steuereinheit 46, die an die Steuerventileinrichtung 45 elektrisch angeschlossen ist, kann die Steuerventileinrichtung 45 elektrisch ansteuern, um die gewünschten Betriebszustände der Kontraktionsantriebe 34, 35 vorzugeben.

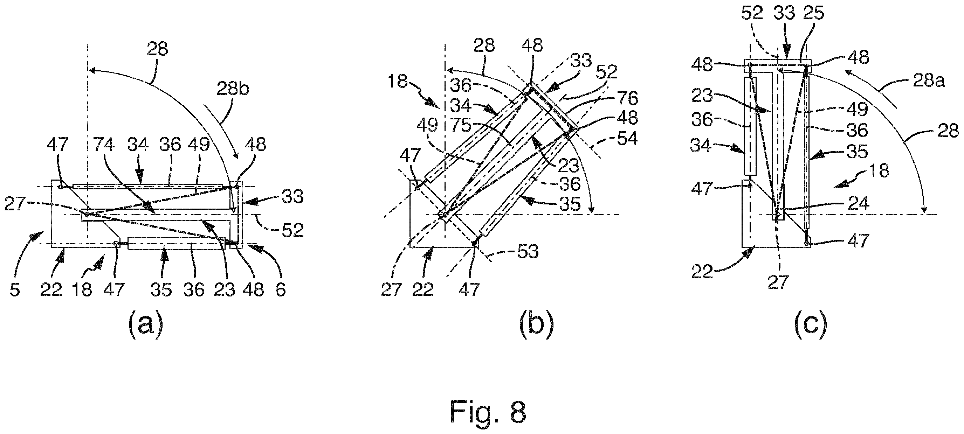

Im unbetätigten beziehungsweise deaktivierten Zustand hat jeder Kontraktionsantrieb 34, 35 eine beispielsweise aus Figur 8(b) ersichtliche Ausgangslänge. Hierbei kann in dem Antriebsraum 42 allerdings bereits ein Grund-Füllvolumen an Antriebsfluid enthalten sein, um den betreffenden Kontraktionsantrieb 34, 35 zu stabilisieren.

Durch anschließendes Aktivieren durch Fluideinspeisung kann sich der Kontraktionsantrieb 34, 35 gegenüber der Ausgangslänge verkürzen, was in Figur 8(a) bei dem zweiten Kontraktionsantrieb 35 und in Figur 8(c) bei dem ersten Kontraktionsantrieb 34 der Fall ist.

Jeder Kontraktionsantrieb 34, 35 kann allerdings durch elastische Dehnung des Kontraktionsschlauches 39, die durch eine externe Zugkrafteinleitung hervorgerufen wird, auch in eine die Ausgangslänge überschreitende Länge gedehnt werden, was in Figur 8(a) bei dem ersten Kontraktionsantrieb 34 und in Figur 8(c) bei dem zweiten Kontraktionsantriebe 35 der Fall ist. Diesbezüglich wird im Folgenden von einem axial gedehnten Kontraktionsantrieb 34, 35 gesprochen. Für eine solche axiale Dehnung wird der betreffende Kontraktionsantrieb 34 oder 35 deaktiviert, das heißt sein Antriebsraum 42 durch Verbindung mit der Drucksenke R druckmäßig entlastet. Die für die axiale Dehnung verantwortliche Zugkraft wird durch den aktivierten Kontraktionsantrieb 34 oder 35 erzeugt.

Jeder erster Kontraktionsantrieb 34 ist mit seinem ersten Endstück 37 in einem ersten Befestigungspunkt 47 an der Sockeleinheit 22 und mit seinem zweiten Endstück 38 in einem zweiten Befestigungspunkt 48 an der Schwenkeinheit 23 befestigt. In vergleichbarer Weise ist jeder zweite Kontraktionsantrieb 35 mit seinem ersten Endstück 37 in einem ersten Befestigungspunkt 47 an der Sockeleinheit 22 und mit seinem zweiten Endstück 38 in einem zweiten Befestigungspunkt 48 an der Schwenkeinheit 23 befestigt. Bevorzugt befinden sich die zweiten Befestigungspunkte 48 am Kopfabschnitt 25 der Schwenkeinheit 23.

Die Endstücke 37, 38 sind in den Befestigungspunkten 47, 48 jeweils drehbar gelagert, wobei die zugeordnete Drehachse parallel zu der Haupt-Schwenkachse 27 ausgerichtet ist. Dadurch kann der Kontraktionsantrieb 34, 34 relativ zur Sockeleinheit 22 und zur Schwenkeinheit 23 ohne Abknicken des Kontraktionsschlauches 39 verschwenken, wenn die Schwenkeinheit 23 eine Schwenkbewegung 28 ausführt.

Die Befestigungspunkte 47, 48 sind so platziert, dass - wenn man den Roboterarm 2 mit einer zu der Schwenkebene 29 orthogonalen bzw. rechtwinkeligen Blickrichtung betrachtet, also bei einer in der Achsrichtung der Haupt-Schwenkachse 27 orientierten Blickrichtung - die Haupt-Schwenkachse 27, der zweite Befestigungspunkt 48 jedes ersten Kontraktionsantriebes 34 und der zweite Befestigungspunkt 48 jedes zweiten Kontraktionsantriebes 35 in den Eckpunkten eines in der Zeichnung gestrichelt angedeuteten imaginären Dreiecks 49 liegen, wobei dieses Dreieck 49 zur besseren Unterscheidung als Antriebs-Dreieck 49 bezeichnet wird.

Obgleich prinzipiell auch andere Dreiecksformen für das Antriebs-Dreieck 49 in Frage kommen, empfiehlt sich besonders eine auch bei den illustrierten Ausführungsbeispielen realisierte Gestaltung als gleichschenkliges Dreieck, dessen die Dreiecks-Spitze definierende Eckpunkt auf der Haupt-Schwenkachse 27 liegt.

Die Befestigungspunkte 47, 48 sind so platziert, dass durch Betätigung des ersten Kontraktionsantriebes 34 eine Schwenkbewegung 28 der Schwenkeinheit 23 in der ersten Schwenkrichtung 28a hervorrufbar ist und durch eine Betätigung des zweiten Kontraktionsantriebes 35 eine Schwenkbewegung 28 in der zweiten Schwenkrichtung 28b. Der betätigte Kontraktionsantrieb 34 oder 35 übt auf die Schwenkeinheit 23 ein Drehmoment aus, dessen Hebelarm dem Abstand zwischen der Haupt-Schwenkachse 27 und dem zugeordneten zweiten Befestigungspunkt 48 entspricht. Der jeweils andere erste oder zweite Kontraktionsantrieb 34, 35 bleibt zur Ermöglichung der genannten Schwenkbewegung 28 unbetätigt, damit er kein Gegendrehmoment erzeugt und axial gedehnt werden kann. Durch eine aufeinander abgestimmte gleichzeitige Fluidbeaufschlagung des ersten und zweiten Kontraktionsantriebes 34, 35 lässt sich die Schwenkeinheit 23 in jeder zuvor eingestellten Schwenkposition unbeweglich positionieren, wobei über das in den Antriebsräumen 42 aufgebaute Druckniveau die Steifigkeit des Systems beeinflussbar ist.

Somit kann durch eine entsprechend gesteuerte, aufeinander abgestimmte Betätigung der ersten und zweiten Kontraktionsantriebe 34, 35 der die Schwenkbewegung 28 mitmachende Kopfabschnitt 25 einschließlich der darin befindlichen Kraftabgabe-Schnittstelle 33 entlang der kreisbogenförmigen Arbeits-Bahnkurve 28 in der einen oder anderen Richtung bewegt und an jeder Stelle beliebig lange unbeweglich positioniert werden.

Bevorzugt sind die diversen ersten und zweiten Befestigungspunkte 47, 48 so platziert, dass sie in jeder durch die Kontraktionsantriebe 34, 35 erzielbaren Schwenkposition der Schwenkeinheit 23 auf einander entgegengesetzten Seiten einer in Figur 8 illustrierten Mittelebene 52 der Schwenkeinheit 23 liegen, die durch eine die Haupt-Schwenkachse 27 schneidende mittige Längsachse der Schwenkeinheit 23 und die Haupt-Schwenkachse 27 aufgespannt ist.

Eine aus Figur 8 besonders gut ersichtliche bevorzugte Platzierung der ersten Befestigungspunkte 47 sieht vor, dass die Haupt-Schwenkachse 27 und die ersten Befestigungspunkte 47 sämtlicher zum zugeordneten Armglied 18 gehörender Kontraktionsantriebe 34, 35 auf einer imaginären Verbindungsgerade 53 liegen, die zur besseren Unterscheidung als erste Verbindungsgerade 53 bezeichnet wird. Hier ist wiederum eine Blickrichtung orthogonal zur Schwenkebene 29 zu Grunde gelegt.

Die an der Schwenkeinheit 23 vorgesehenen zweiten Befestigungspunkte 48 der beiden Kontraktionsantriebe 34, 35 liegen auf einer imaginären zweiten Verbindungsgerade 54, die wiederum aus Figur 8 ersichtlich ist. Diese zweite Verbindungsgerade 54 erstreckt sich bevorzugt rechtwinkelig zu der weiter oben definierten Mittelebene 52 der Schwenkeinheit 23. Sie verändert bei der Schwenkbewegung 28 ihre Neigung bezüglich der ersten Verbindungsachse 53.

Der durch die Schwenkbewegung 28 überstreichbare räumliche Bereich hängt davon ab, welche räumliche Orientierung die erste Verbindungsgerade 53 aufweist. Diese räumliche Orientierung der erste Verbindungsgerade 53 ist exemplarisch durch die Arm-Rotationsbewegung 8 veränderbar. Bei nicht drehbarem Roboterarm 2 bleibt die räumliche Ausrichtung der ersten Verbindungsgerade 53 konstant. Die Figuren 1 bis 8 zeigen einen Betriebszustand des Roboterarmes 2, bei dem die erste Verbindungsgerade 53 bezüglich einer Horizontalebene um 45 Grad geneigt ist.

Durch die bei den illustrierten Ausführungsbeispielen gewählte vorteilhafte Platzierung der ersten und zweiten Befestigungspunkte 47, 48 kann die Schwenkeinheit 23 durch entsprechend aufeinander abgestimmte Betätigung der an ihr angreifenden ersten und zweiten Kontraktionsantriebe 34, 35 in wahlweise einer aus Figur 8(a) ersichtlichen ersten Schwenkposition oder in einer aus Figur 8(c) ersichtlichen zweiten Schwenkposition oder in beliebigen dazwischenliegenden Zwischen-Schwenkpositionen positioniert werden, wobei die Figur 8(b) eine winkelmittig zwischen der ersten und zweiten Schwenkposition liegende Zwischen-Schwenkposition zeigt, die im Folgenden auch als mittlere Zwischen-Schwenkposition bezeichnet wird. Exemplarisch beträgt der Schwenkwinkel zwischen der ersten und zweiten Schwenkposition 90 Grad.

Der in der Längsrichtung der ersten Verbindungsgerade 53 gemessene Abstand zwischen den beiden ersten Befestigungspunkten 47 ist bevorzugt größer als der in der Längsrichtung der zweiten Verbindungsgerade 54 gemessene Abstand zwischen den zweiten Befestigungspunkten 48. Allerdings sind die genannten Punktabstände insbesondere so gewählt, dass die Längsachsen 36 der ersten und zweiten Kontraktionsantriebe 34, 35 sowohl in der ersten Schwenkposition als auch in der zweiten Schwenkposition parallel zueinander ausgerichtet sind. Diese Längsachsen 36 haben allerdings in der zweiten Schwenkposition gemäß Figur 8(c) eine im Vergleich zur ersten Schwenkposition gemäß Figur 8(a) um 90 Grad in der Schwenkebene 29 verdrehte Ausrichtung.

In allen Zwischen-Schwenkpositionen sind die Längsachsen 36 der ersten und zweiten Kontraktionsantriebe 34, 35 geneigt zueinander, wobei sie in der Richtung zu den zweiten Befestigungspunkten 48 konvergieren. In der mittleren Zwischen-Schwenkposition gemäß Figur 8(b) spannen die ersten und zweiten Befestigungspunkte 47, 48 der ersten und zweiten Kontraktionsantriebe 34, 35 ein Trapez auf, das zwei von der ersten Verbindungsgerade 53 und von der zweiten Verbindungsgerade 54 gebildete parallele Grundseiten hat. Die beiden Verbindungsgeraden 53, 54 sind also in der winkelmittig zwischen der ersten Schwenkposition und der zweiten Schwenkposition liegenden mittleren Zwischen-Schwenkposition parallel zueinander ausgerichtet.

Zweckmäßigerweise sind die erste Schwenkposition und die zweite Schwenkposition jeweils durch einen mechanischen Anschlag 55a, 55b vorgegeben, wobei exemplarisch ein erster Anschlag 55a für die Vorgabe der ersten Schwenkposition gemäß Figur 8(a) und ein zweiter Anschlag 55b zur Vorgabe der zweiten Schwenkposition gemäß Figur 8(c) zuständig ist. Wie man beispielsweise aus der Figur 4 ersehen kann, sind die beiden Anschläge 55a, 55b zweckmäßigerweise an der Sockeleinheit 22 angeordnet und von Anschlagflächen gebildet, die im Schwenkweg der Schwenkeinheit 23 platziert sind. In der ersten und zweiten Schwenkposition liegt die Schwenkeinheit 23 mit insbesondere ihrem Fußabschnitt 24 entweder an dem ersten Anschlag 55a oder an dem zweiten Anschlag 55b an. Somit handelt es sich bei der erste Schwenkposition und der zweiten Schwenkposition jeweils um eine mechanisch vorgegebene End-Schwenkposition.

In den Figuren 1 bis 7 sind alle Armglieder 18 bei Einnahme der ersten Schwenkposition gezeigt. Aufgrund der exemplarisch vorliegenden drehwinkelmäßigen Ausrichtung des Roboterarms 2 erstrecken sich dabei die Mittelebenen 52 der Schwenkeinheiten 23 in einer Horizontalebene. Ist eine Schwenkeinheit 23 in die zweite Schwenkposition gemäß Figur 8(c) verschwenkt, erstreckt sich ihre Mittelebene 52 in einer Vertikalebene.

In der mittleren Zwischen-Schwenkposition gemäß Figur 8(b) sind die ersten und zweiten Kontraktionsantriebs 34, 35 derart aktiviert, dass sie mit gleicher Zugkraft an den zweiten Befestigungspunkten 48 angreifen. Um ausgehend von dieser mittleren Zwischen-Schwenkposition eine Schwenkbewegung 28 in der ersten Schwenkrichtung 28a zu erhalten, werden die ersten und zweiten Kontraktionsantriebe 34, 35 derart gesteuert betätigt, dass ein Kraftüberschuss zugunsten des ersten Kontraktionsantriebes 34 vorliegt. Um eine Schwenkbewegung 28 in der zweiten Schwenkrichtung 28b zu erzielen, erfolgt eine derartige gesteuerte Druckbeaufschlagung, dass ein Kraftüberschuss zugunsten des zweiten Kontraktionsantriebes 34 vorliegt. Ausgehend von der mittleren Zwischen-Schwenkposition gemäß Figur 8(b) erfolgt dabei jeweils eine Verkürzung des einen Kontraktionsantriebes 34 oder 35, während der jeweils andere Kontraktionsantrieb 35, 34 jeweils axial gedehnt werden kann.

Der Schwenkwinkel und die Betätigungskraft, die an der Kraftabgabe-Schnittstelle 33 abgreifbar sind, lässt sich durch Einstellung des Druckverhältnisses der in den ersten und zweiten Kontraktionsantrieben 34, 35 herrschenden Fluiddrücke beeinflussen und nach Bedarf vorgeben.

Das bei dem Ausführungsbeispiel der Figuren 1 bis 5 als Haupt-Armglied 18a eingesetzte Armglied 18 macht deutlich, dass ein und derselbe Armglied 18 mehrere in der Achsrichtung der Haupt-Schwenkachse 27 nebeneinander angeordnete erste Kontraktionsantriebe 34 und zweite Kontraktionsantriebe 35 aufweisen kann. Die ersten Kontraktionsantriebe 34 sind dabei untereinander zweckmäßigerweise identisch gestaltet, was entsprechend auch für die zweiten Kontraktionsantriebe 35 gilt. Besonders zweckmäßig ist es, wenn sämtliche ersten und zweiten Kontraktionsantriebe 34, 35 identisch ausgebildet sind. Dies ermöglicht eine besonders einfache Ansteuerung.

Die ersten Befestigungspunkte 37 der mehreren ersten Kontraktionsantriebe 34 liegen zweckmäßigerweise auf einer zur Haupt-Schwenkachse 27 parallelen ersten Linie 47a, die in Figur 5 strichpunktiert angedeutet ist. In entsprechender Weise sind auch die zweiten Befestigungspunkte 48 aller ersten Kontraktionsantriebe 44 auf einer zu der Haupt-Schwenkachse 27 parallelen zweiten Linie 48a angeordnet, die ebenfalls in Figur 5 strichpunktiert angedeutet ist. Gleiches gilt für die ersten und zweiten Befestigungspunkte 47, 48 der mehreren zweiten Kontraktionsantriebe 35. In den beiden Ausschnittsvergrößerungen der Figur 1 sind zur weiteren Illustration die beiden ersten Linien 47a und die beiden zweiten Linien 48a ebenfalls eingezeichnet.

Das Haupt-Armglied 18a ist mit seiner Sockeleinheit 22 an der Basiseinheit 3 montiert. Sofern das Haupt-Armglied 18a das einzige Armglied 18 ist, was auf das Ausführungsbeispiel der Figuren 6 und 7 zutrifft, ist der Endeffektor 16 an der Kraftabgabe-Schnittstelle 33 des Haupt-Armgliedes 18a befestigt.

Enthält der Roboterarm 2 mehrere Armglieder 18, ist das auf das Haupt-Armglied 18a folgende Zusatz-Armglied 18b mit seiner Sockeleinheit 22 an die Kraftabgabe-Schnittstelle 33 des Haupt-Armgliedes 18a angebaut. In diesem Fall ist der Endeffektor 16, sofern nur ein Zusatz-Armglied 18b vorhanden ist, an die Kraftabgabe-Schnittstelle 33 dieses einzigen Zusatz-Armgliedes 18b angebaut, wie dies in den Figuren 1 bis 5 illustriert ist. Sofern noch weitere Zusatz-Armglieder 18b vorhanden sind, sind selbige bezogen auf die Ausgestaltung der Figuren 1 bis 5 zwischen das dort bereits vorhandene Zusatz-Armglied 18b und den Endeffektor 16 eingegliedert, wobei aufeinanderfolgende Zusatz-Armglieder 18b wiederum durch Verbindung einer Kraftabgabe-Schnittstelle 33 und einer Sockeleinheit 22 aneinander befestigt sind.

Jede Schwenkeinheit 23 enthält mindestens einen in sich starren Schwenkkörper 57. Abhängig von der geforderten Stabilität und Steifigkeit kann die Schwenkeinheit 23 ein und desselben Armgliedes 18 nur einen einzigen Schwenkkörper 57 aufweisen oder sich aus mehreren in der Achsrichtung der Haupt-Schwenkachse 27 nebeneinander angeordneten und fest miteinander verbundenen Schwenkkörpern 57 zusammensetzen. Eine Schwenkeinheit 23 mit nur einem einzigen Schwenkkörper 57 ist bei dem Zusatz-Armglied 18b der Figuren 1 bis 5 und bei dem Haupt-Armglied 18a der Figuren 6 und 7 realisiert. Eine Schwenkeinheit 23 mit mehreren nebeneinander angeordneten Schwenkkörpern 57 enthält exemplarisch das Haupt-Armglied 18a des Roboterarmes 2 der Figuren 1 bis 5. Bei einer Mehrfachanordnung von Schwenkkörpern 57 empfiehlt sich insbesondere die bei dem Ausführungsbeispiel realisierte Zweifachanordnung.

Jeder Schwenkkörper 57 hat einen proximalen Endabschnitt 58 und einen distalen Endabschnitt 59. Der proximale Endabschnitt 58 gehört zu dem Fußabschnitt 24 und der distale Endabschnitt 59 zu dem Kopfabschnitt 25 der Schwenkeinheit 23.

Um eine einheitliche Schwenkbewegung einer aus mehreren Schwenkkörpern 57 bestehenden Schwenkeinheit 23 zu gewährleisten, sind die mehreren Schwenkkörper 57 unabhängig davon, ob sie direkt aneinander anliegen oder, was gemäß Figuren 1 bis 5 der Fall ist, in einem Querabstand zueinander angeordnet sind, durch Befestigungsmittel fest miteinander verbunden. Es handelt sich dabei bevorzugt um eine lösbare Verbindung, sodass das Armglied 18 jederzeit auch wieder zerlegbar und umrüstbar ist.

Die gegenseitige Befestigung benachbarter Schwenkkörper 57 erfolgt zweckmäßigerweise sowohl im Bereich des Fußabschnittes 24 als auch im Bereich des Kopfabschnittes 25. Dies trifft auf das illustrierte Ausführungsbeispiel zu.

Es wird als besonders vorteilhaft angesehen, wenn der Roboterarm 2 einen modularen Aufbau hat, der eine kostengünstige Realisierung der benötigten Armglieder 18 unter Verwendung von Gleichteilen ermöglicht. Eine solche Modularität wird insbesondere dadurch erhalten, dass die Roboterstruktur 1 zur Verwirklichung der Armglieder 18 über eine Mehrzahl von Armmodulen 63 verfügt, die durch mechanische Verbindung miteinander kombinierbar sind. Die Armmodule 63 sind untereinander bevorzugt identisch aufgebaut und jeweils als eine Baugruppe realisiert, die sich aus mehreren miteinander verbundenen Komponenten zusammensetzt. Jedes Armmodul 63 ist vor seiner Integration in den Roboterarm 2 als Einheit handhabbar.

Ein bevorzugter Aufbau der einzelnen Armmodule 63 ist besonders gut aus den Figuren 6 und 7 ersichtlich. Demnach beinhaltet das Armmodul 63 einen Sockelkörper 64, einen der weiter oben schon erwähnten Schwenkkörper 57 sowie jeweils einen der weiter oben schon erwähnten ersten und zweiten Kontraktionsantriebe 34, 35.

Bei dem Sockelkörper 64 handelt es sich um eine individuelle Komponente, an der der Schwenkkörper 57 im Bereich seines proximalen Endabschnittes 58 durch Bestandteile der Schwenklagereinrichtung 26 verschwenkbar gelagert ist. Durch diese schwenkbare Lagerung wird die Haupt-Schwenkachse 27 definiert.

An dem Sockelkörper 64 sind zwei erste Befestigungspunkte 47 ausgebildet, während am distalen Endabschnitt 59 des Schwenckörpers 57 zwei zweite Befestigungspunkte 48 ausgebildet sind. Die beiden zu dem Armmodul 63 gehörenden ersten und zweiten Kontraktionsantriebe 34, 35 sind jeweils in der oben erläuterten Weise an einem der ersten Befestigungspunkte 47 und an einem der zweiten Befestigungspunkte 48 befestigt.

An dem Armmodul 63 befindet sich eine an dem Sockelkörper 64 ausgebildete proximale Befestigungsschnittstelle 65 und eine am distalen Endabschnitt 59 des Schwenkkörpers 57 ausgebildete distale Befestigungsschnittstelle 66.

Das Haupt-Armglied 18a des Roboterarms 2 der Figuren 1 bis 5 beinhaltet zwei Armmodule 63 des vorgenannten Aufbaus. Diese beiden Armmoduls 63 sind im Bereich der Sockelkörper 64 unter Verwendung der proximalen Befestigungsschnittstellen 65 fest miteinander verbunden und sind außerdem im Bereich der distalen Endabschnitte 59 der Schwenkkörper 57 unter Verwendung der distalen Befestigungsschnittstellen 66 aneinander befestigt.

Die gegenseitige Befestigung an den proximalen Befestigungsschnittstellen 65 erfolgt zweckmäßigerweise unter Mitwirkung eines in Figur 7 gut ersichtlichen separaten Tragkörpers 67, an dem in der Achsrichtung der Haupt-Schwenkachse 27 nebeneinanderliegend mehrere Montageplätze 68 ausgebildet sind, an denen jeweils ein Armmodul 63 mit seinem Sockelkörper 64 unter Mitwirkung der proximalen Befestigungsschnittstelle 65 fest montierbar ist. Gemeinsam bilden die Montageplätze 68 eine Sockelkörper-Befestigungsschnittstelle 72.

Beispielsweise verfügt die proximale Befestigungsschnittstelle 65 über Befestigungslöcher, die im an einen Montageplatz 68 angesetzten Zustand mit Befestigungslöchern des Tragkörpers 67 fluchten, wobei der feste Zusammenhalt durch hindurchgesteckte Verbindungsbolzen 69 erzielt wird.

Der Tragkörper 67 verfügt exemplarisch zur Bildung der Sockelkörper-Befestigungsschnittstelle 72 über drei nebeneinander angeordnete Montageplätze 68, von denen zur Realisierung des Haupt-Armgliedes 18a nur die beiden äußeren Montageplätze 68 verwendet werden, an denen jeweils einer der Sockelkörper 64 befestigt ist.

Im zusammengebauten Zustand bilden die mehreren Sockelkörper 64 zusammen mit dem Tragkörper 67 eine Sockeleinheit 22 der oben beschriebenen Art. Die Fixierung der Sockeleinheit 22 an der Basiseinheit 3 erfolgt insbesondere mittels des Tragkörpers 67, der exemplarisch an dem Abtriebsglied 12 befestigt ist und den eingangs erwähnten Adapter 7 bildet.

Wenn ein Haupt-Armglied 18a gemäß Figuren 6 und 7 ein einziges Armmodul 63 enthält, ist dieses einzige Armmodul 63 mit seinem Sockelkörper 64 an einem der Montageplätze 86 des Tragkörpers 67 angebracht, wobei insbesondere der mittlere Montageplatz 68 genutzt wird.

Bei demjenigen Armglied 18, das das distale Armende 6 des Roboterarmes 2 bildet, ist die distale Befestigungsschnittstelle 66 unmittelbar als Kraftabgabe-Schnittstelle 33 verwendbar, an der ein Endeffektor 16 montiert ist. Eine solche Verwendung liegt bei dem Zusatz-Armglied 18b der Figuren 1 bis 5 und bei dem Haupt-Armglied 18a der Figuren 6 und 7 vor.

Die beiden in das Haupt-Armglied 18a des Roboterarmes 2 der Figuren 1 bis 5 integrierten Armmodule 63 sind an ihren distalen Befestigungsschnittstellen 66 unter Einbeziehung des Sockelkörpers 64 des daran angebauten Zusatz-Armgliedes 18b miteinander verbunden. Die Schwenkkörper 57 der beiden Armmodule 63 haben einen derartigen Querabstand, dass der Sockelkörper 64 mit der proximalen Befestigungsschnittstelle 65 dazwischen passt. Die proximale Befestigungsschnittstelle 65 des Sockelkörpers 64 ist an dem benachbarten distalen Befestigungsschnittstellen 66 der beiden Schwenkkörper 57 befestigt, was exemplarisch mit Hilfe von Befestigungsschrauben 73 realisiert ist, die in Befestigungslöcher der proximalen Befestigungsschnittstelle 65 und der distalen Befestigungsschnittstellen 66 eingesetzt sind.

Jeder Schwenkkörper 57 hat zweckmäßigerweise den nachstehend erläuterten Aufbau, der bei geringem Gewicht ein hohes Maß an Steifigkeit bietet. Zweckmäßigerweise haben sämtliche Armmodule 63 einen identisch aufgebauten Schwenkkörper 57 dieser Bauart.

Der Schwenkkörper 57 hat eine T-förmige Hauptstruktur 74 bestehend aus einer Längsstrebe 75 und einer an einem vorderen Endbereich der Längsstrebe 75 angeordneten Querstrebe 76. Die Querstrebe 76 ist kürzer als die Längsstrebe 75 und in ihrem längsmittigen Bereich am vorderen Endbereich der Längsstrebe 75 angebracht, wobei insbesondere eine einstückige Verbindung vorliegt. Die Querstrebe 76 definiert den distalen Endabschnitt 95 des Schwenkkörpers 57, während ein diesbezüglich entgegengesetzter hinterer Endbereich 77 der Längsstrebe 75 den proximalen Endabschnitt 58 des Schwenkkörper 75 bildet.

Der Schwenkkörper 57 hat außerdem zwei in einer V-förmigen Konfiguration angeordnete Versteifungsstreben 78, die sich jeweils zwischen einem der äußeren Endbereiche der Querstrebe 76 und dem hinteren Endbereich 77 der Längsstrebe 75 erstrecken. Jede Versteifungsstrebe 78 ist mit der Querstrebe 76 und der Längsstrebe 75 fest verbunden, insbesondere in einstückiger Weise.

Der derart strukturierte Schwenkkörper 75 hat eine dreiecksförmige Außenkontur.

Die Zwischenräume zwischen einer jeweiligen Versteifungsstrebe 78 und der Längsstrebe 75 können prinzipiell offen oder auch vollständig ausgefüllt sein. Besonders bewährt hat sich an dieser Stelle die Ausbildung einer fachwerkartigen Stützstruktur 81, durch die eine Durchbiegung der Versteifungsstreben 78 bei geringem Materialbedarf wirksam verhindert wird.

Jede Versteifungsstrebe 78 besteht zweckmäßigerweise aus zwei in der Achsrichtung der Haupt-Schwenkachse zueinander beabstandeten Strebenholmen 82. Auch die beiden voneinander wegweisenden Schenkel der Querstrebe 76 setzen sich zweckmäßigerweise aus zwei entsprechend beabstandeten Schenkellaschen 83 zusammen, von denen jeweils eine einstückig in einen der Strebenholme 82 übergeht. Durch diese Strukturierung sind in dem Schwenkkörper 57 zwei die Längsstrebe 75 an einander entgegengesetzten Längsseiten flankierende rinnenförmige Aufnahmevertiefungen 84 ausgebildet, in denen sich jeweils einer der ersten und zweiten Kontraktionsantriebe 34, 35 mit zumindest dem sich an das zweite Endstück 38 anschließenden Längenabschnitt seines Kontraktionsschlauches 39 erstreckt. Auf diese Weise können die Kontraktionsantriebe 34, 35 mit geringem Abstand zueinander angeordnet werden, was in der Schwenkebene 29 geringe Querabmessungen des Armgliedes 18 ermöglicht. Die zweiten Endstücke 38 sind zweckmäßigerweise zwischen den Schenkellaschen 83 angeordnet, wobei sich die zweiten Befestigungspunkte 48 an diesen Schenkellaschen 83 befinden.

Es versteht sich, dass die rinnenförmige Aufnahmevertiefungen 84 auch bei einem abweichend vom Ausführungsbeispiel strukturierten Schwenkkörper 57 realisiert sein können.

Zweckmäßigerweise ist jedes Armglied 18 mit einer Detektionseinrichtung 85 ausgestattet, durch die der zwischen der Schwenkeinheit 23 und der Sockeleinheit 22 vorliegende Schwenkwinkel erfassbar ist. Die Detektionseinrichtungen 85 sind in nicht weiter illustrierter Weise elektrisch an die elektronische Steuereinheit 46 angeschlossen, sodass den momentanen Schwenkwinkel repräsentierende Signale bei der Ansteuerung der Steuerventileinrichtung 55 berücksichtigt werden können. Insbesondere besteht die Möglichkeit zu einer positionsgeregelten Ansteuerung der Kontraktionsantriebe 34, 35.

Zurückkommend auf die eingangs angesprochene Basiseinheit 3 ist zur erwähnen, dass deren Antriebseinrichtung 11 bevorzugt unter Verwendung mindestens eines dritten Kontraktionsantriebes 86 realisiert ist. Der Aufbau des mindestens einen dritten Kontraktionsantriebes 86 entspricht zweckmäßigerweise demjenigen der ersten und zweiten Kontraktionsantriebe 34, 35.

Gemäß dem illustrierten vorteilhaften Ausführungsbeispiel enthält die Antriebseinrichtung 11 zwei längsseits nebeneinander angeordnete dritte Kontraktionsantriebe 86, die jeweils mit einem ersten Endabschnitt 87 am Gehäuse 13 der Basiseinheit 3 befestigt sind und mit einem diesbezüglich entgegengesetzten zweiten Endabschnitt 88 an den beiden Enden eines Zahnriemens 91 angreifen, der um ein Antriebszahnrad 92 mit Verzahnungseingriff herumgeschlungen ist, das in drehfester Verbindung mit dem Abtriebsglied 12 steht.

Die beiden dritten Kontraktionsantriebe 86 sind derart aufeinander abgestimmt mittels Fluidkraft betätigbar, dass der Zahnriemen 91 in der einen oder anderen Richtung um das Antriebszahnrad 92 umläuft und selbiges unter Erzeugung der Arm-Rotationsbewegung 8 rotativ mitnimmt.

## Patentansprüche

1. Roboterstruktur, mit einem beweglichen Roboterarm (2), der über mindestens ein eine Längserstreckung aufweisendes Armglied (18) verfügt, wobei mindestens ein Armglied (18) des Roboterarmes (2) folgendermaßen aufgebaut ist:
(a) mit einer Sockeleinheit (22),
(b) mit einer Schwenkeinheit (23), die über einen Fußabschnitt (24) und einen diesbezüglich beabstandeten Kopfabschnitt (25) verfügt, wobei der Kopfabschnitt (25) eine zur Kraftabgabe geeignete Kraftabgabe-Schnittstelle (33) aufweist,
(c) wobei die Schwenkeinheit (23) an ihrem Fußabschnitt (24) über eine Schwenklagereinrichtung (26) an der Sockeleinheit (22) verschwenkbar gelagert ist, sodass sie unter Ausführung einer Schwenkbewegung (28) um eine von der Schwenklagereinrichtung (26) definierte Haupt-Schwenkachse (27) in einer zu der Haupt-Schwenkachse (27) rechtwinkeligen Schwenkebene (29) relativ zu der Sockeleinheit (22) verschwenkbar ist, wobei sich der Kopfabschnitt (25) einschließlich der Kraftabgabe-Schnittstelle (33) bei der Schwenkbewegung (28) entlang einer kreisbogenförmigen Arbeits-Bahnkurve (32) bewegt,
(d) mit mindestens einem eine Längsachse (36) aufweisenden fluidbetätigten ersten Kontraktionsantrieb (34) und mindestens einem eine Längsachse (36) aufweisenden fluidbetätigten zweiten Kontraktionsantrieb (35), wobei jeder dieser Kontraktionsantriebe (34, 35) ein erstes Endstück (37) und ein zweites Endstück (38) sowie einen sich zwischen den beiden Endstücken (37, 38) erstreckenden flexiblen Kontraktionsschlauch (39) aufweist, wobei eine Fluidbeaufschlagung eines von dem Kontraktionsschlauch (39) begrenzten internen Antriebsraumes (42) mit einer Längenkontraktion des Kontraktionsschlauches (39) einhergeht, aufgrund derer sich der Abstand zwischen den beiden Endstücken (37, 39) verringert,
(e) wobei der mindestens eine erste Kontraktionsantrieb (34) und der mindestens eine zweite Kontraktionsantrieb (35) jeweils mit dem ersten Endstück (37) in einem ersten Befestigungspunkt (47) an der Sockeleinheit (22) und mit dem zweiten Endstück (38) in einem zweiten Befestigungspunkt (48) an der Schwenkeinheit (23) befestigt ist,
(f) wobei die Haupt-Schwenkachse (27) der Schwenkeinheit (23), der zweite Befestigungspunkt (48) des mindestens einen ersten Kontraktionsantriebes (34) und der zweite Befestigungspunkt (48) des mindestens einen zweiten Kontraktionsantriebes (35), bei orthogonal zur Schwenkebene (29) orientierter Blickrichtung, in den Eckpunkten eines imaginären Antriebs-Dreiecks (49) liegen, sodass durch eine eine Fluidbeaufschlagung des Antriebsraumes (42) hervorrufende Betätigung des mindestens einen ersten Kontraktionsantriebes (34) eine Schwenkbewegung (28) der Schwenkeinheit (23) in einer ersten Schwenkrichtung (28a) und durch eine eine Fluidbeaufschlagung des Antriebsraumes (42) hervorrufende Betätigung des mindestens einen zweiten Kontraktionsantriebes (35) eine Schwenkbewegung (28) der Schwenkeinheit (23) in einer der ersten Schwenkrichtung (28a) entgegengesetzten zweiten Schwenkrichtung (28b) hervorrufbar ist,
(g) wobei der Kopfabschnitt (25) der Schwenkeinheit (23) einschließlich der daran befindlichen Kraftabgabe-Schnittstelle (33) durch gesteuerte Betätigung des mindestens einen ersten Kontraktionsantriebes (34) und des mindestens einen zweiten Kontraktionsantriebes (35) entlang der Arbeits-Bahnkurve (32) hin und her bewegbar und positionierbar ist,
**dadurch gekennzeichnet, dass** die Befestigungspunkte (47, 48) der ersten und zweiten Kontraktionsantriebe (34, 35) so platziert sind, dass in zwei um 90 Grad zueinander verschwenkten ersten und zweiten Schwenkpositionen der Schwenkeinheit (23) die Längsachse (36) des mindestens einen ersten Kontraktionsantriebes (34) und die Längsachse (36) des mindestens einen zweiten Kontraktionsantriebes (35) jeweils parallel zueinander ausgerichtet sind, jedoch eine in der Schwenkebene (29) um 90 Grad zueinander verdrehte Ausrichtung haben.

2. Roboterstruktur nach Anspruch 1, **dadurch gekennzeichnet, dass** das Antriebs-Dreieck (49) ein gleichschenkliges Dreieck ist, dessen Spitze auf der Haupt-Schwenkachse (27) der Schwenkeinheit (23) liegt.

3. Roboterstruktur nach Anspruch 1 oder 2, **dadurch gekennzeichnet, dass** die Haupt-Schwenkachse (27) der Schwenkeinheit (23), der erste Befestigungspunkt (47) des mindestens einen ersten Kontraktionsantriebes (34) und der erste Befestigungspunkt (47) des mindestens einen zweiten Kontraktionsantriebes (35), bei orthogonal zur Schwenkebene (29) der Schwenkeinheit orientierter Blickrichtung, auf einer imaginären Verbindungsgeraden (53) liegen.

4. Roboterstruktur nach einem der Ansprüche 1 bis 3, **dadurch gekennzeichnet, dass** es sich bei der ersten und zweiten Schwenkposition jeweils um eine durch einen mechanischen Anschlag (55a, 55b) vorgegebene End-Schwenkposition handelt.

5. Roboterstruktur nach einem der Ansprüche 1 bis 4, **dadurch gekennzeichnet, dass** in einer winkelmittig zwischen der ersten Schwenkposition und der zweiten Schwenkposition liegenden mittleren Zwischen-Schwenkposition der Schwenkeinheit (23), bei orthogonal zur Schwenkebene (29) der Schwenkeinheit (23) orientierter Blickrichtung, eine den ersten Befestigungspunkt (47) des mindestens einen ersten Kontraktionsantriebes (34) und den ersten Befestigungspunkt (47) des mindestens einen zweiten Kontraktionsantriebes (35) verbindende imaginäre erste Verbindungsgerade (53) sowie eine den zweiten Befestigungspunkt (48) des mindestens einen ersten Kontraktionsantriebes (34) und den zweiten Befestigungspunkt (48) des mindesten einen zweiten Kontraktionsantriebes (35) verbindende imaginäre zweite Verbindungsgerade (54) parallel zueinander verlaufen.

6. Roboterstruktur nach einem der Ansprüche 1 bis 5, **dadurch gekennzeichnet, dass** sich sowohl der zweite Befestigungspunkt (48) des mindestens einen ersten Kontraktionsantriebes (34) als auch der zweite Befestigungspunkt (48) des mindestens einen zweiten Kontraktionsantriebes (35) am Kopfabschnitt (25) der Schwenkeinheit (23) befindet.

7. Roboterstruktur nach einem der Ansprüche 1 bis 6, **dadurch gekennzeichnet, dass** mindestens ein Armglied (18) mehrere rechtwinkelig zu der Schwenkebene (2) der Schwenkeinheit (23) nebeneinander angeordnete erste Kontraktionsantriebe (34) und mehrere rechtwinkelig zu der Schwenkebene (29) der Schwenkeinheit (23) nebeneinander angeordnete zweite Kontraktionsantriebe (35) aufweist, die jeweils in einem ersten Befestigungspunkt (47) an der Sockeleinheit (23) und in einem zweiten Befestigungspunkt (48) an der Schwenkeinheit (23) befestigt sind, wobei das Armglied (18) zweckmäßigerweise eine gleiche Anzahl identisch ausgebildeter erster und zweiter Kontraktionsantriebe (34, 35) aufweist.

8. Roboterstruktur nach einem der Ansprüche 1 bis 7, **dadurch gekennzeichnet, dass** der Roboterarm (2) mehrere in ihrer Längsrichtung aneinandergereihte Armglieder (18, 18a, 18b) aufweist, wobei mindestens ein Armglied (18, 18b) mit seiner Sockeleinheit (22) an einer Kraftabgabe-Schnittstelle (33) eines anderen Armgliedes (18, 18a) befestigt ist.

9. Roboterstruktur nach einem der Ansprüche 1 bis 8, **dadurch gekennzeichnet, dass** an der Kraftabgabe-Schnittstelle (33) mindestens eines Armgliedes (18) ein Endeffektor (16) befestigt ist, beispielsweise ein Greifer.

10. Roboterstruktur nach einem der Ansprüche 1 bis 9, **dadurch gekennzeichnet, dass** die Schwenkeinheit (23) mindestens eines Armgliedes (18) über mindestens einen in sich starren Schwenkkörper (57) verfügt, der einen dem Fußabschnitt (24) der Schwenkeinheit (23) zugeordneten proximalen Endabschnitt (58) und einen dem Kopfabschnitt (25) der Schwenkeinheit (24) zugeordneten distalen Endabschnitt (59) aufweist.

11. Roboterstruktur nach Anspruch 10, **dadurch gekennzeichnet, dass** mindestens ein Armglied (18) des Roboterarmes (2) eine Schwenkeinheit (23) mit mehreren Schwenkkörpern (57) aufweist, wobei die mehreren Schwenkkörper (57) in zu der Schwenkebene (29) parallelen Ebenen nebeneinander angeordnet und aneinander befestigt sind.

12. Roboterstruktur nach Anspruch 10 oder 11, **dadurch gekennzeichnet, dass** der mindestens eine Schwenkkörper (57) eine T-förmige Hauptstruktur (74) mit einer Längsstrebe (75) und einer längenmittig an einem vorderen Endbereich der Längsstrebe (75) angeordneten, bezüglich der Längsstrebe (75) kürzeren Querstrebe (76) aufweist, wobei die Querstrebe (76) den distalen Endabschnitt (59) des Schwenkkörpers (57) bildet und ein diesbezüglich entgegengesetzter hinterer Endbereich (77) der Längsstrebe (75) den proximalen Endabschnitt (58) des Schwenkkörpers (57) bildet.

13. Roboterstruktur nach Anspruch 12, **dadurch gekennzeichnet, dass** der mindestens eine Schwenkkörper (57) zwei in einer V-förmigen Konfiguration angeordnete Versteifungsstreben (78) hat, die sich jeweils zwischen einem der beiden äußeren Endbereiche der Querstrebe (76) und dem hinteren Endbereich (77) der Längsstrebe (75) erstrecken, wobei zwischen jeder Versteifungsstrebe (78) und der Längsstrebe (75) zweckmäßigerweise eine fachwerkartige Stützstruktur (81) ausgebildet ist.

14. Roboterstruktur nach einem der Ansprüche 10 bis 13, **dadurch gekennzeichnet, dass** die Sockeleinheit (22) mindestens eines Armgliedes (18) mindestens einen gesonderten Sockelkörper (64) aufweist, an dem über die Schwenklagereinrichtung (26) ein Schwenkkörper (57) um die Haupt-Schwenkachse (27) verschwenkbar gelagert ist.

15. Roboterstruktur nach Anspruch 14 in Verbindung mit Anspruch 11, **dadurch gekennzeichnet, dass** jeder der mehreren Schwenkkörper (57) der Schwenkeinheit (23) an einem eigenen gesonderten Sockelkörper (64) verschwenkbar gelagert ist.

16. Roboterstruktur nach Anspruch 14 oder 15, **dadurch gekennzeichnet, dass** die Sockeleinheit (22) einen Tragkörper (67) aufweist, an dem eine Sockelkörper-Befestigungsschnittstelle (72) ausgebildet ist, an der mindestens ein Sockelkörper (64) montierbar oder montiert ist, wobei die Sockelkörper-Befestigungsschnittstelle (72) zweckmäßigerweise zur gleichzeitigen Befestigung mehrerer Sockelkörper (64) geeignet ist.

17. Roboterstruktur nach einem der Ansprüche 14 bis 16, **dadurch gekennzeichnet, dass** sie mehrere untereinander identische, jeweils als eine Baugruppe ausgebildete Armmodule (63) aufweist, die in einer gewünschten Anzahl und Gruppierung zur modularen Zusammenstellung des Roboterarmes (2) geeignet sind und die jeweils einen Sockelkörper (64), einen Schwenkkörper (57), einen ersten Kontraktionsantrieb (43) und einen zweiten Kontraktionsantrieb (35) enthalten, wobei der Schwenkkörper (57) mittels der Schwenklagereinrichtung (26) um die Haupt-Schwenkachse (27) verschwenkbar an dem Sockelkörper (57) gelagert ist und wobei jeder Kontraktionsantrieb (34, 35) zum einen mit seinem ersten Endstück (37) in einem ersten Befestigungspunkt (47) am Sockelkörper (64) und zum anderen mit seinem zweiten Endstück (38) in einem zweiten Befestigungspunkt (48) am Schwenkkörper (57) befestigt ist.

18. Roboterstruktur nach Anspruch 17, **dadurch gekennzeichnet, dass** mehrere Armmodule (63) zur Bildung eines Armgliedes (18) längsseits aneinander angebaut und mit einerseits ihren Sockelkörpern (64) und andererseits den distalen Endabschnitten (59) ihrer Schwenkkörper (57) aneinander befestigt sind, wobei die aneinander befestigten Schwenkkörper (57) die Schwenkeinheit (23) des Armgliedes (18) bilden.

19. Roboterstruktur nach Anspruch 17 oder 18, **dadurch gekennzeichnet, dass** zur Bildung eines mehrere aufeinanderfolgend angeordnete Armglieder (18) aufweisenden Roboterarmes (2) mindestens ein Armmodul (63) mit seinem Sockelkörper (64) an einen distalen Endabschnitt (59) mindestens eines Schwenckörpers (57) eines weiteren Armmoduls (63) angebaut ist, insbesondere derart, dass die Haupt-Schwenkachsen (27) der Schwenkeinheiten (23) der aneinander angebauten Armmodule (63) parallel zueinander ausgerichtet sind.

20. Roboterstruktur nach einem der Ansprüche 1 bis 19, **dadurch gekennzeichnet, dass** sie eine den Roboterarm (2) tragende Basiseinheit (3) aufweist, die über ein durch eine Antriebseinrichtung (11) der Basiseinheit (3) rotativ antreibbares Abtriebsglied (12) verfügt, an dem der Roboterarm (2) mit der Sockeleinheit (22) eines Armgliedes (18) befestigt ist, sodass der Roboterarm (2) um eine zu der Haupt-Schwenkachse (27) der Schwenkeinheit (23) des mindestens einen Armgliedes (18) rechtwinkelige Arm-Drehachse (8) hin und her verdrehbar ist, wobei die Antriebseinrichtung (11) zweckmäßigerweise mindestens einen fluidbetätigten dritten Kontraktionsantrieb (86) aufweist.

21. Roboterstruktur nach einem der Ansprüche 1 bis 20, **dadurch gekennzeichnet, dass** der Kontraktionsschlauch (39) jedes Kontraktionsantriebes (34, 35, 86) einen aus einem gummielastischen Material bestehenden Schlauchkörper (39a) und eine zu dem Schlauchkörper (39a) koaxiale, in das Material des Schlauchkörpers (39a) eingebettete Strangstruktur (39b) aus einer Vielzahl von biegeflexiblen und zugleich axial zugfesten Fasersträngen aufweist, wobei der Kontraktionsschlauch (39) an den beiden ihm zugeordneten ersten und zweiten Endstücken (37, 38) zugfest und abgedichtet befestigt ist.

## Claims

1. Robotic structure, with a movable robotic arm (2), which has at least one member (18) with longitudinal elongation, wherein at least one member (18) of the robotic arm (2) is built as follows:
(a) with a plinth unit (22),
(b) with a rotary unit (23), which has a foot portion (24) and a head portion (25) spaced apart accordingly, wherein the head portion (25) has a force output interface (33) suitable for the force output,
(c) wherein the rotary unit (23) is pivotly mounted at its foot portion (24) on the plinth unit (22) via a pivot bearing mechanism (26), so that on effecting a pivot movement (28) it is pivotable relative to the plinth unit (22) around a main pivot axis (27), which axis is defined by the pivot bearing mechanism (26), on a swivel plane (29) at right angles to the main pivot axis (27), wherein the head portion (25) including the force output interface (33) moves along an arch-shaped work trajectory (32) with the pivot movement (28),
(d) with at least one fluid-activated first contraction drive (34) having a longitudinal axis (36) and at least one fluid-activated second contraction drive (35) having a longitudinal axis (36), wherein each of these contraction drives (34, 35) has a first end piece (37) and a second end piece (38) as well as a flexible contraction hose (39) extending between the two end pieces (37, 38), wherein an impact of fluid on an internal drive chamber (42) limited by the contraction hose (39) is accompanied by a length contraction of the contraction hose (39), as a result of which the distance between the two end pieces (37, 39) is reduced,
(e) wherein the at least one first contraction drive (34) and the at least one second contraction drive (35) are each attached to the first end piece (37) in a first attachment point (47) on the plinth unit (22) and to the second end piece (38) in a second attachment point (48) on the rotary unit (23),
(f) wherein the main pivot axis (27) of the rotary unit (23), the second attachment point (48) of the at least one first contraction drive (34) and the second attachment point (48) of the at least one second contraction drive (35), with a line of sight oriented orthogonal to the swivel plane (29), lie in the corner points of an imaginary drive triangle (49), so that through activation of the at least one first contraction drive (34), causing fluid to impact the drive chamber (42), a pivot movement (28) of the rotary unit (23) can be caused in a first pivot direction (28a) and through activation of the at least one second contraction drive (35), causing fluid to impact the drive chamber (42), a pivot movement (28) of the rotary unit (23) can be caused in a second pivot direction (28b) opposite to the first pivot direction (28a),
(g) wherein through controlled activation of the at least one first contraction drive (34) and the at least one second contraction drive (35) the head portion (25) of the rotary unit (23) including the affixed force output interface (33) is movable and positionable back and forth along the work trajectory (32),
**characterised in that** the attachment points (47, 48) of the first and second contraction drives (34, 35) are positioned such that in two first and second pivot points of the rotary unit (23), which are pivoted at 90 degrees to each other, the longitudinal axis (36) of the at least one first contraction drive (34) and the longitudinal axis (36) of the at least one second contraction drive (35) are each aligned parallel to each other, however have an alignment rotated at 90 degrees to each other on the swivel plane (29).

2. Robotic structure according to Claim 1, **characterised in that** the drive triangle (49) is an isosceles triangle, the tip of which lies on the main pivot axis (27) of the rotary unit (23).

3. Robotic structure according to Claim 1 or 2, **characterised in that** the main pivot axis (27) of the rotary unit (23), the first attachment point (47) of the at least one first contraction drive (34) and the first attachment point (47) of the at least one second contraction drive (35), with a line of sight oriented orthogonal to the swivel plane (29) of the rotary unit, lie on an imaginary connecting line (53).

4. Robotic structure according to one of Claims 1 to 3, **characterised in that** the first and second pivot points are each end pivot points specified by a mechanical stop (55a, 55b).

5. Robotic structure according to one of Claims 1 to 4, **characterised in that** in a middle, in-between pivot point of the rotary unit (23), lying angle-centred between the first pivot point and the second pivot point with a line of sight oriented orthogonal to the swivel plane (29) of the rotary unit (23), an imaginary first connecting line (53) connecting the first attachment point (47) of the at least one first contraction drive (34) and the first attachment point (47) of the at least one second contraction drive (35) plus an imaginary second connecting line (54) connecting the second attachment point (48) of the at least one first contraction drive (34) and the second attachment point (48) of the at least one second contraction drive (35) run parallel to each other.

6. Robotic structure according to one of Claims 1 to 5, **characterised in that** both the second attachment point (48) of the at least one first contraction drive (34) as well as the second attachment point (48) of the at least one second contraction drive (35) is located on the head portion (25) of the rotary unit (23).

7. Robotic structure according to one of Claims 1 to 6, **characterised in that** at least one member (18) has a plurality of first contraction drives (34) arranged next to each other at right angles to the swivel plane (2) of the rotary unit (23) and a plurality of second contraction drives (35) arranged next to each other at right angles to the swivel plane (29) of the rotary unit (23), which are each attached in a first attachment point (47) on the plinth unit (23) and in a second attachment point (48) on the rotary unit (23), wherein the member (18) usefully has an equal number of identically designed first and second contraction drives (34, 35).

8. Robotic structure according to one of Claims 1 to 7, **characterised in that** the robotic arm (2) has a plurality of adjoined members (18, 18a, 18b) in its longitudinal direction, wherein at least one member (18, 18b) is attached at its plinth unit (22) to a force output interface (33) of another member (18, 18a).

9. Robotic structure according to one of Claims 1 to 8, **characterised in that** an end effector (16), for example a gripper, is attached on the force output interface (33) of at least one member (18).

10. Robotic structure according to one of Claims 1 to 9, **characterised in that** the rotary unit (23) of at least one member (18) has at least one rigid swivel head (57), which has a proximal end portion (58) associated with the foot portion (24) of the rotary unit (23) and a distal end portion (59) associated with the head portion (25) of the rotary unit (24).

11. Robotic structure according to Claim 10, **characterised in that** at least one member (18) of the robotic arm (2) has a rotary unit (23) with a plurality of swivel heads (57), wherein the plurality of swivel heads (57) are arranged on planes parallel to the swivel plane (29) and attached to each other.

12. Robotic structure according to Claim 10 or 11, **characterised in that** the at least one swivel head (57) has a T-shaped main structure (74) with longitudinal bracing (75) and transverse bracing (76), which is shorter in comparison to the longitudinal bracing (75) and arranged longitudinally centred on a front end region of the longitudinal bracing (75), wherein the transverse bracing (76) forms the distal end portion (59) of the swivel head (57) and an accordingly opposite rear end region (77) of the longitudinal bracing (75) forms the proximal end portion (58) of the swivel head (57).

13. Robotic structure according to Claim 12, **characterised in that** the at least one swivel head (57) has two reinforcing braces (78) arranged in a V-shaped configuration, which each extend between one of the two outer end regions of the transverse bracing (76) and the rear end region (77) of the longitudinal bracing (75), wherein between each reinforcing brace (78) and the longitudinal bracing (75) a framework-like support structure (81) is usefully designed.

14. Robotic structure according to one of Claims 10 to 13, **characterised in that** the plinth unit (22) of at least one member (18) has at least one separate plinth body (64), on which a swivel head (57) is pivotly mounted around the main pivot axis (27) via the pivot bearing mechanism (26).

15. Robotic structure according to Claim 14 in conjunction with Claim 11, **characterised in that** each of the plurality of swivel heads (57) of the rotary unit (23) is pivotly mounted on it own separate plinth body (64).

16. Robotic structure according to Claim 14 or 15, **characterised in that** the plinth unit (22) has a support body (67), on which a plinth body attachment interface (72) is designed, on which at least one plinth body (64) can be mounted or is mounted, wherein the plinth body attachment interface (72) is usefully suitable for the simultaneous attachment of a plurality of plinth bodies (64).

17. Robotic structure according to one of Claims 14 to 16, **characterised in that** it has a plurality of arm modules (63) identical to each other and designed as an assembly, which in the desired quantity and grouping are suitable for the modular composition of the robotic arm (2) and which each contain a plinth body (64), a swivel head (57), a first contraction drive (43) and a second contraction drive (35), wherein the swivel head (57) is pivotly mounted around the main pivot axis (27) on the plinth body (57) by means of the pivot bearing mechanism (26) and wherein each contraction drive (34, 35) is attached firstly to its first end piece (37) in a first attachment point (47) on the plinth body (64) and secondly to its second end piece (38) in a second attachment point (48) on the swivel head (57).

18. Robotic structure according to Claim 17, **characterised in that** a plurality of arm modules (63) for forming a member (18) are connected alongside each other and on one side are attached to each other to their plinth bodies (64) and on the other side to the distal end portions (59) of their swivel heads (57), wherein the swivel heads (57) attached to each other form the rotary unit (23) of the member (18).

19. Robotic structure according to Claim 17 or 18, **characterised in that** to form a robotic arm (2) having a plurality of successfully arranged members (18) at least one arm module (63) is connected by its plinth body (64) to a distal end portion (59) of at least one swivel head (57) of a further arm module (63), in particular in a manner that the main pivot axes (27) of the rotary units (23) of the connected arm modules (63) are aligned parallel to each other.

20. Robotic structure according to one of Claims 1 to 19, **characterised in that** it has a base unit (3) supporting the robotic arm (2), which has a drive member (12), which can be rotatively driven by a drive mechanism (11) of the base unit (3) and at which the robotic arm (2) is attached to the plinth unit (22) of a member (18), so that the robotic arm (2) is rotatable back and forth around an arm rotation axis (8) at right angles to the main rotary axis (27) of the rotary unit (23) of the at least one member (18), wherein the drive mechanism (11) usefully has at least one fluid-activated third contraction drive (86).

21. Robotic structure according to one of Claims 1 to 20, **characterised in that** the contraction hose (39) of each contraction drive (34, 35, 86) has a tubular body (39a) consisting of a rubber-elastic material and a cord structure (39b) consisting of a large number of flexible and at the same time axially tension-resistant fibre strands and which is coaxial to the tubular body (39a) and embedded in the material of the tubular body (39a), wherein the contraction hose (39) is attached to its two associated first and second end pieces (37, 38) in a tension-resistant and sealed manner.

## Revendications

1. Structure de robot, avec un bras robotisé mobile (2), qui dispose d'au moins un élément de bras (18) présentant une extension longitudinale, dans laquelle au moins un élément de bras (18) du bras robotisé (2) est construit comme suit :
(a) avec une unité de socle (22),
(b) avec une unité de pivotement (23), qui dispose d'une section de pied (24) et d'une section de tête (25) tenue à distance par rapport à celle-ci, dans laquelle la section de tête (25) présente une interface de distribution de force (33) adaptée pour la distribution de force,
(c) dans laquelle l'unité de pivotement (23) est montée de manière à pouvoir pivoter sur l'unité de socle (22) par l'intermédiaire d'un dispositif de palier de pivotement (26) sur sa section de pied (24) si bien qu'elle peut être pivotée par rapport à l'unité de socle (22) en exécutant un déplacement par pivotement (28) autour d'un axe de pivotement principal (27) défini par le dispositif de palier de pivotement (26) dans un plan de pivotement (29) situé à angle droit par rapport à l'axe de pivotement principal (27), dans laquelle la section de tête (25) y compris l'interface de distribution de force (33) se déplace, lors du déplacement par pivotement (28), le long d'une trajectoire de travail (32) en forme d'arc de cercle,
(d) avec au moins un premier entraînement de contraction (34) actionné par un fluide présentant un axe longitudinal (36) et au moins un deuxième entraînement de contraction (35) actionné par un fluide présentant un axe longitudinal (36), dans laquelle chacun desdits entraînements de contraction (34, 35) présente un premier embout (37) et un deuxième embout (38) ainsi qu'un tuyau flexible de contraction (39) souple s'étendant entre les deux embouts (37, 38), dans laquelle une sollicitation par un fluide d'un espace d'entraînement interne (42) délimité par le tuyau flexible de contraction (39) va de pair avec une contraction longitudinale du tuyau flexible de contraction (39), en raison de laquelle la distance entre les deux embouts (37, 39) se réduit,
(e) dans laquelle l'au moins un premier entraînement de contraction (34) et l'au moins un deuxième entraînement de contraction (35) sont fixés respectivement avec le premier embout (37) dans un premier point de fixation (47) sur l'unité de socle (22) et avec le deuxième embout (38) dans un deuxième point de fixation (48) sur l'unité de pivotement (23),
(f) dans laquelle l'axe de pivotement principal (27) de l'unité de pivotement (23), le deuxième point de fixation (48) de l'au moins un premier entraînement de contraction (34) et le deuxième point de fixation (48) de l'au moins un deuxième entraînement de contraction (35) se situent, dans une direction d'observation orientée de manière orthogonale par rapport au plan de pivotement (29), dans des points d'angle d'un triangle d'entraînement (49) imaginaire, si bien qu'un déplacement par pivotement (28) de l'unité de pivotement (23) dans une première direction de pivotement (28a) peut être entraîné par un actionnement, provoquant une sollicitation par un fluide de l'espace d'entraînement (42), de l'au moins un premier entraînement de contraction (34) et qu'un déplacement par pivotement (28) de l'unité de pivotement (23) dans une deuxième direction de pivotement (28b) opposée à la première direction de pivotement (28a) peut être entraîné par un actionnement, provoquant une sollicitation par un fluide de l'espace d'entraînement (42), de l'au moins un deuxième entraînement de contraction (35),
(g) dans laquelle la section de tête (25) de l'unité de pivotement (23) y compris l'interface de distribution de force (33) se trouvant sur celle-ci peut être déplacée en va-et-vient et peut être positionnée le long de la trajectoire de travail (32) par un actionnement commandé de l'au moins un premier entraînement de contraction (34) et de l'au moins un deuxième entraînement de contraction (35),
**caractérisée en ce que** les points de fixation (47, 48) des premier et deuxième entraînements de contraction (34, 35) sont placés de telle sorte que l'axe longitudinal (36) de l'au moins un premier entraînement de contraction (34) et l'axe longitudinal (36) de l'au moins un deuxième entraînement de contraction (35) sont orientés respectivement de manière parallèle l'un par rapport à l'autre dans deux positions de pivotement, une première et une seconde, de l'unité de pivotement (23) pivotées l'une par rapport à l'autre de 90 degrés, ont toutefois une orientation gauchie l'une par rapport à l'autre de 90 degrés dans le plan de pivotement (29).

2. Structure de robot selon la revendication 1, **caractérisée en ce que** le triangle d'entraînement (49) est un triangle isocèle, dont la pointe se situe sur l'axe de pivotement principal (27) de l'unité de pivotement (23).

3. Structure de robot selon la revendication 1 ou 2, **caractérisée en ce que** l'axe de pivotement principal (27) de l'unité de pivotement (23), le premier point de fixation (47) de l'au moins un premier entraînement de contraction (34) et le premier point de fixation (47) de l'au moins un deuxième entraînement de contraction (35), se situent, dans une direction d'observation orientée de manière orthogonale par rapport au plan de pivotement (29) de l'unité de pivotement, sur une droite de liaison imaginaire (53).

4. Structure de robot selon l'une quelconque des revendications 1 à 3,
**caractérisée en ce que** la première et la deuxième position de pivotement sont respectivement une position de pivotement finale prédéfinie par une butée mécanique (55a, 55b).

5. Structure de robot selon l'une quelconque des revendications 1 à 4,
**caractérisée en ce qu'**une première droite de liaison imaginaire (53) reliant le premier point de fixation (47) de l'au moins un premier entraînement de contraction (34) et le premier point de fixation (47) de l'au moins un deuxième entraînement de contraction (35) ainsi qu'une deuxième droite de liaison imaginaire (54) reliant le deuxième point de fixation (48) de l'au moins un premier entraînement de contraction (34) et le deuxième point de fixation (48) de l'au moins un deuxième entraînement de contraction (35) s'étendent de manière parallèle l'une par rapport à l'autre dans une position de pivotement intermédiaire de l'unité de pivotement (23) centrale située au centre dans l'angle entre la première position de pivotement et la deuxième position de pivotement, dans une direction d'observation orientée de manière orthogonale par rapport au plan de pivotement (29) de l'unité de pivotement (23).

6. Structure de robot selon l'une quelconque des revendications 1 à 5,
**caractérisée en ce qu'**à la fois le deuxième point de fixation (48) de l'au moins un premier entraînement de contraction (34) et le deuxième point de fixation (48) de l'au moins un deuxième entraînement de contraction (35) se situent sur la section de tête (25) de l'unité de pivotement (23).

7. Structure de robot selon l'une quelconque des revendications 1 à 6,
**caractérisée en ce qu'**au moins un élément de bras (18) présente plusieurs premiers entraînements de contraction (34) disposés côte à côte à angle droit par rapport au plan de pivotement (2) de l'unité de pivotement (23) et plusieurs deuxièmes entraînements de contraction (35) disposés côte à côte à angle droit par rapport au plan de pivotement (29) de l'unité de pivotement (23), qui sont fixés respectivement dans un premier point de fixation (47) sur l'unité de socle (23) et dans un deuxième point de fixation (48) sur l'unité de pivotement (23), dans laquelle l'élément de bras (18) présente de manière opportune un même nombre de premiers et de deuxièmes entraînements de contraction (34, 35) réalisés de manière identique.

8. Structure de robot selon l'une quelconque des revendications 1 à 7,
**caractérisée en ce que** le bras de robot (2) présente plusieurs éléments de bras (18, 18a, 18b) alignés les uns aux autres dans leur direction longitudinale, dans laquelle au moins un élément de bras (18, 18b) est fixé sur une interface de distribution de force (33) d'un autre élément de bras (18, 18a) avec son unité de socle (22).

9. Structure de robot selon l'une quelconque des revendications 1 à 8,
**caractérisée en ce qu'**un effecteur terminal (16), par exemple un grappin, est fixé sur l'interface de distribution de force (33) d'au moins un élément de bras (18).

10. Structure de robot selon l'une quelconque des revendications 1 à 9,
**caractérisée en ce que** l'unité de pivotement (23) d'au moins un élément de bras (18) dispose d'au moins un corps de pivotement (57) en soi rigide, qui présente une section d'extrémité proximale (58) associée à la section de pied (24) de l'unité de pivotement (23) et une section d'extrémité distale (59) associée à la section de tête (25) de l'unité de pivotement (24).

11. Structure de robot selon la revendication 10, **caractérisée en ce qu'**au moins un élément de bras (18) du bras de robot (2) présente une unité de pivotement (23) avec plusieurs corps de pivotement (57), dans laquelle les plusieurs corps de pivotement (57) sont disposés côte à côte dans des plans parallèles au plan de pivotement (29) et sont fixés les uns aux autres.

12. Structure de robot selon la revendication 10 ou 11, **caractérisée en ce que** l'au moins un corps de pivotement (57) présente une structure principale en forme de T (74) avec une entretoise longitudinale (75) et une entretoise transversale (76) plus courte que l'entretoise longitudinale (75) disposée au centre longitudinalement sur une zone d'extrémité avant de l'entretoise longitudinale (75), dans laquelle l'entretoise transversale (76) forme la section d'extrémité distale (59) du corps de pivotement (57) et une zone d'extrémité arrière (77), opposée à celle-ci, de l'entretoise longitudinale (75) forme la section d'extrémité proximale (58) du corps de pivotement (57).

13. Structure de robot selon la revendication 12, **caractérisée en ce que** l'au moins un corps de pivotement (57) a deux entretoises de renfort (78) disposées en une configuration en forme de V, qui s'étendent respectivement entre une des deux zones d'extrémité extérieures de l'entretoise transversale (76) et la zone d'extrémité arrière (77) de l'entretoise longitudinale (75), dans laquelle de manière opportune une structure d'appui (81) de type treillis est réalisée entre chaque entretoise de renfort (78) et l'entretoise longitudinale (75).

14. Structure de robot selon l'une quelconque des revendications 10 à 13,
**caractérisée en ce que** l'unité de socle (22) d'au moins un élément de bras (18) présente au moins un corps de socle (64) séparé, sur lequel un corps de pivotement (57) est monté de manière à pouvoir être pivoté autour de l'axe de pivotement principal (27) par l'intermédiaire du dispositif de palier de pivotement (26).

15. Structure de robot selon la revendication 14 en lien avec la revendication 11, **caractérisée en ce que** chacun des plusieurs corps de pivotement (57) de l'unité de pivotement (23) est monté de manière à pouvoir être pivoté sur un corps de socle séparé (64) propre.

16. Structure de robot selon la revendication 14 ou 15, **caractérisée en ce que** l'unité de socle (22) présente un corps de support (67), sur lequel une interface de fixation de corps de socle (72) est réalisée, sur laquelle au moins un corps de socle (64) peut être monté ou est monté, dans laquelle l'interface de fixation de corps de socle (72) est adaptée de manière opportune pour la fixation simultanée de plusieurs corps de socle (64).

17. Structure de robot selon l'une quelconque des revendications 14 à 16, **caractérisée en ce qu'**elle présente plusieurs modules de bras (63) identiques les uns aux autres, réalisés respectivement en tant qu'un ensemble modulaire, qui sont adaptés, en un nombre souhaité et en un regroupement souhaité, à composer de manière modulaire le bras robotisé (2) et qui contiennent respectivement un corps de socle (64), un corps de pivotement (57), un premier entraînement de contraction (43) et un deuxième entraînement de contraction (35), dans laquelle le corps de pivotement (57) est monté sur le corps de socle (57) de manière à pouvoir pivoter autour de l'axe de pivotement principal (27) au moyen du dispositif de palier de pivotement (26) et dans laquelle chaque entraînement de contraction (34, 35) est fixé d'une part par son premier embout (37) dans un premier point de fixation (47) sur le socle de corps (64) et d'autre part par son deuxième embout (38) dans un deuxième point de fixation (48) sur le corps de pivotement (57).

18. Structure de robot selon la revendication 17, **caractérisée en ce que** plusieurs modules de bras (63) sont montés les uns sur les autres longitudinalement pour former un élément de bras (18) et sont fixés les uns sur les autres par d'une part leurs corps de socle (64) et d'autre part par les sections d'extrémité distales (59) de leurs corps de pivotement (57), dans laquelle les corps de pivotement (57) fixés les uns aux autres forment l'unité de pivotement (23) de l'élément de bras (18).

19. Structure de robot selon la revendication 17 ou 18, **caractérisée en ce qu'**au moins un module de bras (63) est monté par son corps de socle (64) sur une section d'extrémité distale (59) d'au moins un corps de pivotement (57) d'un autre module de bras (63) pour former un bras robotisé (2) présentant plusieurs éléments de bras (18) disposés les uns après les autres, en particulier de telle manière que les axes de pivotement principaux (27) des unités de pivotement (23) des modules de bras (63) montés les uns sur les autres sont orientés de manière parallèle les uns par rapport aux autres.

20. Structure de robot selon l'une quelconque des revendications 1 à 19,
**caractérisée en ce qu'**elle présente une unité de base (3) supportant le bras robotisé (2), qui dispose d'un élément de sortie (12) pouvant être entraîné en rotation par un dispositif d'entraînement (11) de l'unité de base (3), sur lequel le bras robotisé (2) est fixé par l'unité de socle (22) d'un élément de bras (18) si bien que le bras robotisé (2) peut être tordu en va-et-vient autour d'un axe de rotation de bras (8) situé à angle droit par rapport à l'axe de pivotement principal (27) de l'unité de pivotement (23) de l'au moins un élément de bras (18), dans laquelle le dispositif d'entraînement (11) présente de manière opportune au moins un troisième entraînement de contraction (86) actionné par un fluide.

21. Structure de robot selon l'une quelconque des revendications 1 à 20,
**caractérisée en ce que** le tuyau flexible de contraction (39) de chaque entraînement de contraction (34, 35, 86) présente un corps de tuyau flexible (39a) constitué d'un matériau élastique comme de la gomme et une structure en boyau (39b) coaxiale par rapport au corps de tuyau flexible (39a), intégrée dans le matériau du corps de tuyau flexible (39a), composée d'une pluralité de boyaux de fibres flexibles en flexion et dans le même temps résistantes à la traction axialement, dans laquelle le tuyau flexible de contraction (39) est fixé de manière résistante à la traction et de manière étanchéifiée sur les deux premier et deuxième embouts (37, 38) qui lui sont associés.
